# EUROPEAN PATENT APPLICATION

(11) **EP 4 675 410 A1**
(43) Date of publication of application: **07.01.2026**
(21) Application number: 24855232.5
(22) Date of filing: 29.02.2024
(51) Int. Cl.: G06F 3/0481

(54) **METHOD FOR DISPLAYING QR CODE AND RELATED ELECTRONIC DEVICE**

(30) Priority: 18.08.2023 CN 202311052022
(71) Applicant: Honor Device Co., Ltd., Shenzhen, Guangdong 518040 (CN)
(72) Inventor: WANG, Xiaofei, Shenzhen, Guangdong 518040 (CN); WANG, Huan, Shenzhen, Guangdong 518040 (CN)
(74) Representative: Gill Jennings & Every LLP
(86) International application number: PCT/CN2024/079219
(87) International publication number: WO 2025/039501

(57) **Abstract**

This application provides a two-dimensional code display method and a related electronic device. The electronic device includes a display screen. The display screen includes a first screen and a second screen. Display directions of the first screen and the second screen are opposite to each other when the display screen is in a folded state. The display directions of the first screen and the second screen are the same when the display screen is in an unfolded state. When the display screen is in the folded state, a first user interface including an interface of a first application is displayed on the first screen; a first operation is received at a first time point, and a first two-dimensional code of a second application is displayed on the second screen in response to the first operation; the first user interface is displayed on the first screen in a process of displaying the first two-dimensional code on the second screen; and the second screen is turned off after the first two-dimensional code is scanned. When the display screen is in the unfolded state, a second user interface of the first application is displayed on the display screen; and the first operation is received at a second time point, and the first two-dimensional code of the second application is not displayed on the second screen. This application can improve user experience.

## Description

This application claims priority to Chinese Patent Application No. 202311052022.8, filed with the China National Intellectual Property Administration on August 18, 2023 and entitled "TWO-DIMENSIONAL CODE DISPLAY METHOD AND RELATED ELECTRONIC DEVICE", which is incorporated herein by reference in its entirety.

### TECHNICAL FIELD

This application relates to the field of terminal technologies, and in particular, to a two-dimensional code display method and a related electronic device.

### BACKGROUND

During use of an electronic device, a currently performed task needs to be interrupted if a two-dimensional code, for example, a payment code or a transport code, needs to be displayed. Then, a corresponding application is opened, and then a two-dimensional code in the application is opened. For example, the electronic device is displaying content of an ebook in a display interface. If a two-dimensional code, for example, a payment code or a transport code, is to be displayed in this case, the electronic device needs to pause displaying the content of the ebook. Then, a corresponding application (for example, an application such as WeChat or Alipay) is started in response to a start operation of a user, and a corresponding two-dimensional code is further displayed in the display interface in response to a related operation of the user. In this manner of displaying a two-dimensional code, there are many operation steps, and the currently performed task needs to be interrupted, affecting user experience.

### SUMMARY

This application provides a two-dimensional code display method and a related electronic device. The method is applied to an electronic device with an outward foldable screen, to improve user experience.

According to a first aspect, this application provides a two-dimensional code display method, applied to an electronic device, where the electronic device includes a display screen, the display screen includes a first screen and a second screen, display directions of the first screen and the second screen are opposite to each other when the display screen is in a folded state, the display directions of the first screen and the second screen are the same when the display screen is in an unfolded state, and the first screen and the second screen are two different display regions of the display screen; and the method includes:
displaying a first user interface on the first screen when the display screen is in the folded state, where the first user interface includes an interface of a first application;
receiving a first operation of a user at a first time point, displaying a first two-dimensional code of a second application on the second screen in response to the first operation, and displaying the first user interface on the first screen in a process of displaying the first two-dimensional code on the second screen;
turning off the second screen after the first two-dimensional code is scanned;
displaying a second user interface of the first application on the display screen when the display screen is in the unfolded state, where the second user interface is an interface obtained after the first user interface is adapted to the unfolded state; and
receiving the first operation of the user at a second time point, and not displaying the first two-dimensional code of the second application on the second screen.

Optionally, the first operation includes a taptap operation performed on a back surface of the first screen. For example, a back surface of the first screen is a front surface of the second screen if the display screen is in the folded state. A back surface of the first screen is a back cover of the electronic device if the display screen is in the unfolded state.

In the foregoing solution, when the display screen of the electronic device is in the folded state, to prevent task execution of a main screen (that is, the first screen) from being effected, if the user needs to display a specific two-dimensional code (for example, a transport code, a payment code, or a receive code), the electronic device may display the two-dimensional code on a back screen (that is, the second screen) in response to an operation (for example, the first operation) of the user. That is, in this solution, a two-dimensional code that needs to be used is quickly pulled up on the back screen without interrupting a task currently being performed on the first screen of the electronic device, thereby reducing operation steps of displaying a corresponding two-dimensional code, and improving user experience. In addition, if the display screen is in the unfolded state, to prevent current use of the display screen by the user from being affected, the two-dimensional code is not displayed on the second screen even if the first operation is received.

In a possible implementation, the first screen is in a locked state or a screen-off state when the display screen is in the folded state; and the method further includes:
receiving the first operation of the user at a third time point, and not displaying the first two-dimensional code of the second application because the first screen is in the locked state or the screen-off state.

In the foregoing solution, when the display screen is in the folded state and the first screen is in the locked state or the screen-off state, the two-dimensional code is not displayed on the second screen even if the first operation is received. Therefore, an accidental touch can be avoided, and information security of the user can be protected, thereby preventing information about the user from being leaked without awareness.

In a possible implementation, before the displaying a first user interface on the first screen, the method further includes:
displaying, by the electronic device, the second user interface when the electronic device is in the unfolded state, where the second user interface does not include a first floating window; and
the displaying a first user interface on the first screen includes:
   displaying, by the electronic device, the first user interface on the first screen after the electronic device changes from the unfolded state to the folded state, where the first user interface includes the first floating window, and the first floating window includes a first interface element of the first two-dimensional code.

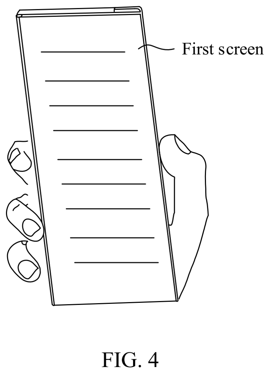

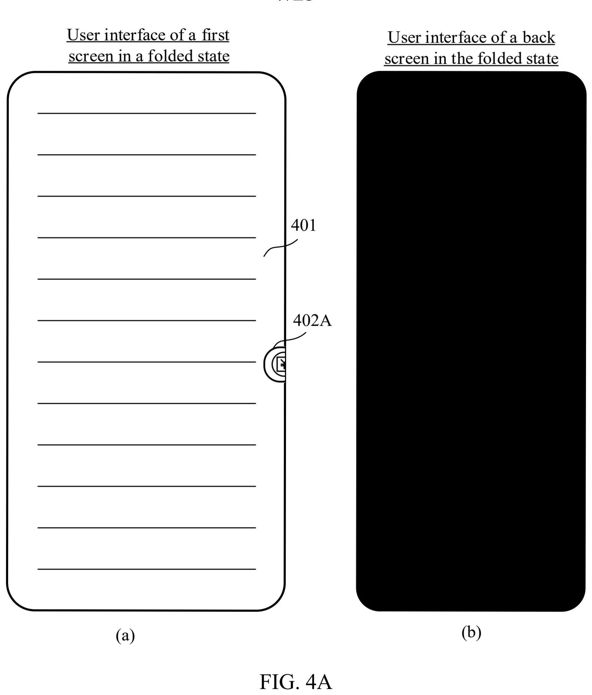

For example, in an implementation, the electronic device displays the first user interface on the first screen in response to an operation of changing from the unfolded state to the folded state. In this case, the first user interface includes a floating ball (for example, an operable control 402A shown in (a) of FIG. 4A). Then, the electronic device displays the first floating window in response to an operation performed on the floating ball. Alternatively, in another possible implementation, the electronic device displays the first user interface on the first screen in response to an operation of changing from the unfolded state to the folded state, and the first user interface includes the first floating window. Optionally, if an operation performed by the user on the first floating window is not received within preset duration (for example, 3 seconds or 5 seconds) after the first floating window is displayed, the first floating window changes into a floating ball and is hidden.

Optionally, the method further includes: receiving, by the first user interface when the display screen is in the folded state, a second operation performed by the user on the first interface element; and displaying the first two-dimensional code on the second screen in response to the second operation.

Optionally, the first interface element includes at least one of an icon of the second application, a name of the second application, and a type of the first two-dimensional code.

In the foregoing solution, when the display screen is in the folded state, the first floating window may be further displayed on the first screen to provide another operable interface for the user, to pull up a corresponding two-dimensional code on the second screen for display. Therefore, operations of pulling up the two-dimensional code on the second screen are enriched, and a user requirement is taken into account, thereby improving user experience.

In a possible implementation, the method further includes:
expanding the first floating window and displaying a second interface element of a second two-dimensional code of a third application in response to an operation performed on a pull-down control of the first floating window; and
receiving a third operation performed by the user on the second interface element, and displaying the second two-dimensional code on the second screen in response to the third operation.

In the foregoing solution, the first floating window may be further expanded to display more two-dimensional code options, so that the user can select a two-dimensional code that needs to be displayed on the back screen. An operation is convenient.

In a possible implementation, before the first two-dimensional code is scanned, the method further includes:
displaying a second floating window on the first screen, where the second floating window includes information indicating that the first two-dimensional code is scanned.

In the foregoing solution, after the two-dimensional code displayed on the back screen is scanned, a window prompting that scanning is completed may be further displayed on the main screen, to inform the user in a timely manner, thereby improving user experience.

In a possible implementation, before the receiving a first operation of a user, and displaying a first two-dimensional code of a second application on the second screen in response to the first operation, the method further includes:
obtaining first state information of the display screen; and
listening for an input event of the first operation when the first state information indicates that the display screen is in the folded state, is not locked, and is screen-on.

In the foregoing solution, the electronic device listens for the input event of the first operation only when the display screen is in the folded state, is not locked, and is screen-on, so that a corresponding event can be captured in a timely manner, and a quick response can be made.

In a possible implementation, before the receiving the first operation of the user, and not displaying the first two-dimensional code on the display screen, the method further includes:
obtaining second state information of the display screen; and
cancelling listening for an input event of the first operation when the second state information indicates that the display screen is in a target state, where the target state includes the display screen being in the unfolded state, the locked state, or the screen-off state.

In the foregoing solution, the electronic device cancels listening for the first operation when the display screen is in the unfolded state, the locked state, or the screen-off state. Specifically, the two-dimensional code is not pulled up on the second screen if listening for the first operation is canceled. In this case, the task being performed on the display screen may not be affected when the display screen is in the unfolded state, and user information may be protected when the display screen is in the locked state or the screen-off state, thereby preventing the user information from being leaked.

In a possible implementation, the displaying a first two-dimensional code of a second application on the second screen in response to the first operation includes:
displaying a target window and a third user interface on the second screen in response to the first operation, where the third user interface is a user interface that is in the second application and that includes the first two-dimensional code, the target window includes a first region and a second region, the first region is a transparent region, the second region is a black region, the target window covers the third user interface, and a position of the first two-dimensional code corresponds to a position of the first region. That is, the first two-dimensional code is displayed in the first region.

In the foregoing solution, the target window serves as a mask, so that content other than the two-dimensional code in the third user interface can be covered, and unnecessary interference is reduced.

In a possible implementation, the turning off the second screen includes:
setting the first region to be black;
removing a task window displayed on the second screen, where the task window includes the third user interface; and
dismissing the target window.

In the foregoing solution, to quickly present the second screen that is already turned off to the user without displaying additional content to disturb the user, the transparent first region may be set to be black first. In this case, the entire target window covering at an upper layer is black, and the entire back screen is black. Then, an operation such as removing a task window from the back screen is performed, and the target window is dismissed, to turn off the back screen.

According to a second aspect, this application provides a two-dimensional code display method, applied to an electronic device, where the electronic device includes a display screen, the display screen includes a first screen and a second screen, display directions of the first screen and the second screen are opposite to each other when the display screen is in a folded state, the display directions of the first screen and the second screen are the same when the display screen is in an unfolded state, and the first screen and the second screen are two different display regions of the display screen; and the method includes:
displaying a user interface of a first application and a first floating window on the first screen when the display screen is in the folded state, where the first floating window includes a first interface element of a first two-dimensional code of a second application;
receiving, at a first time point, a selection operation performed by a user on the first interface element, displaying the first two-dimensional code on the second screen in response to the selection operation, displaying the user interface of the first application on the first screen in a process of displaying the first two-dimensional code on the second screen, and turning off the second screen after the first two-dimensional code is scanned; and
not displaying, by the display screen, the first floating window when the display screen is in a target state, where the target state includes the display screen being in the unfolded state, a locked state, or a screen-off state.

In the foregoing solution, when the display screen of the electronic device is in the folded state, to prevent task execution of a main screen (that is, the first screen) from being effected, if the user needs to display a specific two-dimensional code (for example, a transport code, a payment code, or a receive code), the electronic device may display the two-dimensional code on a back screen (that is, the second screen) in response to an operation (for example, the selection operation) of the user. That is, in this solution, a two-dimensional code that needs to be used is quickly pulled up on the back screen without interrupting a task currently being performed on the first screen of the electronic device, thereby reducing operation steps of displaying a corresponding two-dimensional code, and improving user experience. In addition, if the display screen is in the unfolded state, to prevent current use of the display screen by the user from being affected, the two-dimensional code is not displayed on the second screen even if the first operation is received. If the display screen is in the locked state or the screen-off state, to protect information security of the user, the two-dimensional code is not displayed on the second screen even if the first operation is received.

According to a third aspect, this application provides an electronic device. The electronic device includes a display screen. The display screen includes a first screen and a second screen. Display directions of the first screen and the second screen are opposite to each other when the display screen is in a folded state. The display directions of the first screen and the second screen are the same when the display screen is in an unfolded state. The first screen and the second screen are two different display regions of the display screen.

The electronic device further includes a processing unit, configured to perform the following operations:
displaying a first user interface on the first screen when the display screen is in the folded state, where the first user interface includes an interface of a first application;
receiving a first operation of a user at a first time point, displaying a first two-dimensional code of a second application on the second screen in response to the first operation, and displaying the first user interface on the first screen in a process of displaying the first two-dimensional code on the second screen;
turning off the second screen after the first two-dimensional code is scanned;
displaying a second user interface of the first application on the display screen when the display screen is in the unfolded state, where the second user interface is an interface obtained after the first user interface is adapted to the unfolded state; and
receiving the first operation of the user at a second time point, and not displaying the first two-dimensional code of the second application on the second screen.

Optionally, the first operation includes a taptap operation performed on a back surface of the first screen. For example, a back surface of the first screen is a front surface of the second screen if the display screen is in the folded state. A back surface of the first screen is a back cover of the electronic device if the display screen is in the unfolded state.

In a possible implementation, the first screen is in a locked state or a screen-off state when the display screen is in the folded state, and the processing unit is further configured to perform the following operation:
receiving the first operation of the user at a third time point, and not displaying the first two-dimensional code of the second application because the first screen is in the locked state or the screen-off state.

In a possible implementation, before the displaying a first user interface on the first screen, the processing unit is further configured to perform the following operation:
displaying, by the electronic device, the second user interface when the electronic device is in the unfolded state, where the second user interface does not include a first floating window; and
the processing unit is specifically configured to perform the following operation:
   displaying, by the electronic device, the first user interface on the first screen after the electronic device changes from the unfolded state to the folded state, where the first user interface includes the first floating window, and the first floating window includes a first interface element of the first two-dimensional code.

For example, in an implementation, the electronic device displays the first user interface on the first screen in response to an operation of changing from the unfolded state to the folded state. In this case, the first user interface includes a floating ball (for example, an operable control 402A shown in (a) of FIG. 4A). Then, the electronic device displays the first floating window in response to an operation performed on the floating ball. Alternatively, in another possible implementation, the electronic device displays the first user interface on the first screen in response to an operation of changing from the unfolded state to the folded state, and the first user interface includes the first floating window. Optionally, if an operation performed by the user on the first floating window is not received within preset duration (for example, 3 seconds or 5 seconds) after the first floating window is displayed, the first floating window changes into a floating ball and is hidden.

Optionally, the processing unit is further configured to perform the following operations: receiving, by the first user interface when the display screen is in the folded state, a second operation performed by the user on the first interface element; and displaying the first two-dimensional code on the second screen in response to the second operation.

Optionally, the first interface element includes at least one of an icon of the second application, a name of the second application, and a type of the first two-dimensional code.

In a possible implementation, the processing unit is further configured to perform the following operations:
expanding the first floating window and displaying a second interface element of a second two-dimensional code of a third application in response to an operation performed on a pull-down control of the first floating window; and
receiving a third operation performed by the user on the second interface element, and displaying the second two-dimensional code on the second screen in response to the third operation.

In a possible implementation, after the first two-dimensional code is scanned, the processing unit is further configured to perform the following operation:
displaying a second floating window on the first screen, where the second floating window includes information indicating that the first two-dimensional code is scanned.

In a possible implementation, before the receiving a first operation of a user, and displaying a first two-dimensional code of a second application on the second screen in response to the first operation, the processing unit is further configured to perform the following operations:
obtaining first state information of the display screen; and
listening for an input event of the first operation when the first state information indicates that the display screen is in the folded state, is not locked, and is screen-on.

In a possible implementation, before the receiving the first operation of the user, and not displaying the first two-dimensional code on the display screen, the processing unit is further configured to perform the following operations:
obtaining second state information of the display screen; and
cancelling listening for an input event of the first operation when the second state information indicates that the display screen is in a target state, where the target state includes the display screen being in the unfolded state, the locked state, or the screen-off state.

In a possible implementation, the processing unit is specifically configured to perform the following operation:
displaying a target window and a third user interface on the second screen in response to the first operation, where the third user interface is a user interface that is in the second application and that includes the first two-dimensional code, the target window includes a first region and a second region, the first region is a transparent region, the second region is a black region, the target window covers the third user interface, and a position of the first two-dimensional code corresponds to a position of the first region.

In a possible implementation, the processing unit is specifically configured to perform the following operations:
setting the first region to be black;
removing a task window displayed on the second screen, where the task window includes the third user interface; and
dismissing the target window.

According to a fourth aspect, this application provides an electronic device. The electronic device includes a display screen. The display screen includes a first screen and a second screen. Display directions of the first screen and the second screen are opposite to each other when the display screen is in a folded state. The display directions of the first screen and the second screen are the same when the display screen is in an unfolded state. The first screen and the second screen are two different display regions of the display screen. The electronic device further includes a processing unit, configured to perform the following operations:
displaying a user interface of a first application and a first floating window on the first screen when the display screen is in the folded state, where the first floating window includes a first interface element of a first two-dimensional code of a second application;
receiving, at a first time point, a selection operation performed by a user on the first interface element, displaying the first two-dimensional code on the second screen in response to the selection operation, displaying the user interface of the first application on the first screen in a process of displaying the first two-dimensional code on the second screen, and turning off the second screen after the first two-dimensional code is scanned; and
not displaying, by the display screen, the first floating window when the display screen is in a target state, where the target state includes the display screen being in the unfolded state, a locked state, or a screen-off state.

According to a fifth aspect, this application provides an electronic device, including a display screen, one or more processors, and one or more memories. The one or more processors are coupled to the display screen and the one or more memories. The one or more memories are configured to store computer program code. The computer program code includes computer instructions. When the one or more processors execute the computer instructions, the electronic device is enabled to perform the method according to the first aspect and any possible implementation thereof.

According to a sixth aspect, this application provides an electronic device, including a display screen, one or more processors, and one or more memories. The one or more processors are coupled to the display screen and the one or more memories. The one or more memories are configured to store computer program code. The computer program code includes computer instructions. When the one or more processors execute the computer instructions, the electronic device is enabled to perform the method according to the second aspect.

According to a seventh aspect, this application provides a computer-readable storage medium, including instructions. When the instructions are run on an electronic device, the electronic device is enabled to perform the method according to the first aspect and any possible implementation thereof.

According to an eighth aspect, this application provides a computer-readable storage medium, including instructions. When the instructions are run on an electronic device, the electronic device is enabled to perform the method according to the second aspect.

According to a ninth aspect, this application provides a computer program product including instructions. When the computer program product runs on an electronic device, the electronic device is enabled to perform the method according to the first aspect and any possible implementation thereof.

According to a tenth aspect, this application provides a computer program product including instructions. When the computer program product runs on an electronic device, the electronic device is enabled to perform the method according to the second aspect.

The third aspect to the tenth aspect are used to cooperate in implementing the method according to the first aspect and any possible implementation thereof or the second aspect and any possible implementation thereof, and therefore have corresponding beneficial effects in the first aspect and any possible implementation thereof or the second aspect and any possible implementation thereof. Details are not described herein again.

### BRIEF DESCRIPTION OF DRAWINGS

FIG. 1A to FIG. 1D are schematic diagrams of forms of an electronic device according to an embodiment of this application;
FIG. 2 is a schematic diagram of a hardware structure of an electronic device according to an embodiment of this application;
FIG. 3 is a schematic diagram of a software structure of an electronic device according to an embodiment of this application.
FIG. 4 is a schematic diagram showing that a user holds an electronic device by hand according to an embodiment of this application;
FIG. 4A to FIG. 4K are schematic diagrams of user interfaces displayed on an electronic device according to an embodiment of this application; and
FIG. 5 to FIG. 10 are schematic flowcharts of internal interaction of an electronic device according to an embodiment of this application.

### DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application. Mentioning an "embodiment" in this specification means that a specific feature, structure, or characteristic described with reference to this embodiment may be included in at least one embodiment of this application. The term appearing at various positions in this specification does not necessarily refer to a same embodiment, or an independent or alternative embodiment mutually exclusive with another embodiment. A person skilled in the art may explicitly and implicitly understand that the embodiments described in this specification may be combined with another embodiment. Based on the embodiments of this application, all other embodiments obtained by a person of ordinary skill in the art without creative efforts fall within the protection scope of this application.

In the specification, claims, and accompanying drawings of this application, the terms "first", "second", "third", and the like are intended to distinguish between different objects, but are not intended to describe a particular order. In addition, the terms "include" and "have" and any variations thereof are intended to cover a non-exclusive inclusion. For example, a series of steps or units are included, or optionally, steps or units not listed are further included, or optionally, other steps or units inherent to these processes, methods, products, or devices are further included.

The accompanying drawings show only some content related to this application but not all content. Before example embodiments are described in detail, it should be mentioned that some example embodiments are described as processing or methods depicted as flowcharts. Although the flowcharts describe operations (or steps) as sequential processing, many of these operations may be implemented in parallel, concurrently, or simultaneously. In addition, a sequence of the operations may be rescheduled. The processing may be terminated when operations of the processing are completed, but there may be additional steps not included in the accompanying drawings. The processing may correspond to a method, a function, a procedure, a subroutine, a subprogram, and the like.

Terms "part", "module", "system", "unit", and the like used in this specification are used to represent computer-related entities, hardware, firmware, a combination of hardware and software, software, or software in execution. For example, the unit may be but is not limited to a process running on a processor, a processor, an object, an executable file, an execution thread, a program, and/or distributed between two or more computers. In addition, the unit may be executed by various computer-readable media on which various data structures are stored. For example, a unit may communicate through local and/or remote processes based on a signal with one or more data packets (for example, second unit data exchanged with another unit from a local system, a distributed system, and/or a network, and for example, the internet that interacts with another system by using a signal).

With development of users' increasingly diverse requirements for electronic devices, foldable-screen electronic devices that combine large screens with portability have gained widespread popularity among the users. A foldable screen of an electronic device may be folded to form at least two screens. For example, the foldable screen may be folded along a foldable edge or a foldable axis to form a first screen and a second screen. The foldable screens of the electronic devices may be classified into two types according to folding manners. One type of foldable screen is a foldable screen folded outward (briefly referred to as an outward foldable screen), and the other type of foldable screen is a foldable screen folded inward (briefly referred to as an inward foldable screen). An example in which the foldable screen may be folded to form a first screen and a second screen is used. After the outward foldable screen is folded, a display direction of the first screen is opposite to a display direction of the second screen. The display direction is an orientation of a front surface of the screen, that is, a direction that the front surface of the screen faces. When the screen performs display, the display direction is an orientation for the screen to perform display. For example, a display screen of the electronic device is a flexible screen. The first screen and the second screen are two different display regions on a same display screen.

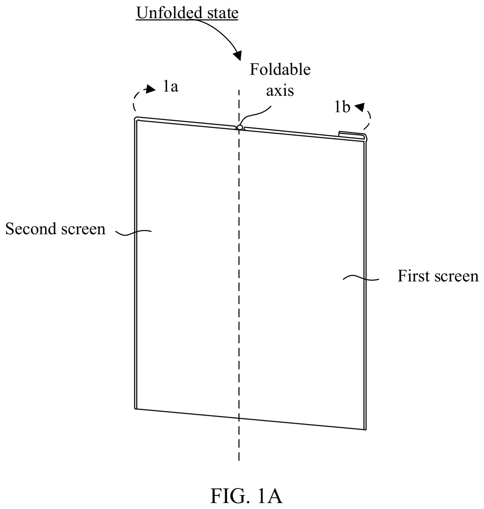

The electronic device in the embodiments of this application mainly takes an electronic device with an outward foldable screen as an example. For example, the outward foldable screen may be folded in two manners: vertical folding and horizontal folding. The vertical folding refers to folding the screen of the electronic device vertically outward. The horizontal folding refers to folding the screen of the electronic device horizontally outward. An example in which the screen of the electronic device is folded horizontally outward is used for description in the embodiments of this application. For example, exemplarily refer to FIG. 1A to FIG. 1D, which are schematic diagrams of appearances of an electronic device with a foldable screen horizontally folded outward according to an embodiment of this application. FIG. 1A is a schematic diagram showing that a display screen of the electronic device is in an unfolded state (briefly referred to as unfolded state). It can be seen that the electronic device includes a first screen and a second screen. In the unfolded state, the first screen and the second screen may form a large display screen to display a user interface. The first screen and the second screen may be folded along a foldable axis or a foldable edge (a foldable axis is used as an example in FIG. 1A to FIG. 1D).

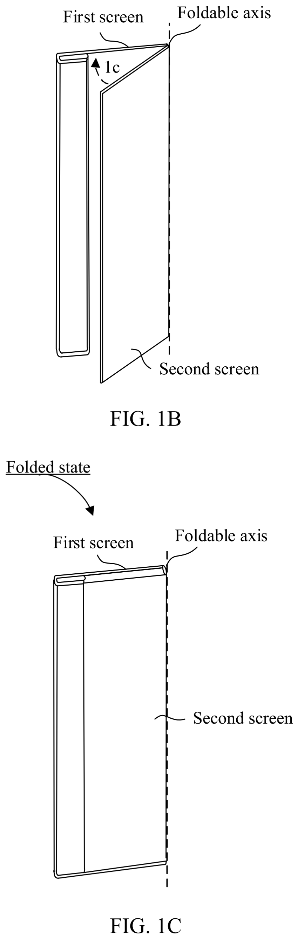

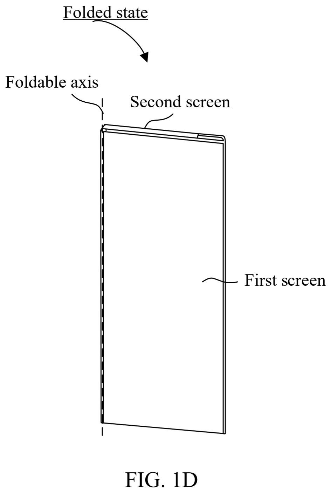

For example, in FIG. 1A, the second screen may be folded along a direction shown in 1a, and/or the first screen may be folded along a direction shown in 1b, to obtain a state shown in FIG. 1B. For example, in FIG. 1B, the second screen may be continuously folded along a direction shown in 1c to obtain a folded state (briefly referred to as a folded state) shown in FIG. 1C. FIG. 1C shows the second screen in the folded state. For the first screen in the folded state, exemplarily refer to FIG. 1D.

For example, the first screen is a main screen of the electronic device, and the second screen is a secondary screen of the electronic device. Usually, the first screen faces a user if the electronic device is in the folded state. Therefore, the second screen may be also referred to as a back screen.

It may be understood that FIG. 1A to FIG. 1D are merely examples, and do not constitute limitations on the embodiments of this application. For example, in a specific implementation, the electronic device may further include another display screen in addition to the first screen and the second screen. This is not limited in the embodiments of this application.

During use of the electronic device with the outward foldable screen, a currently performed task needs to be interrupted if a two-dimensional code, for example, a payment code or a transport code, needs to be displayed. Then, a corresponding application is opened, and then a two-dimensional code in the application is opened. For example, the electronic device is displaying content of an ebook in a display interface. If a two-dimensional code, for example, a payment code or a transport code, is to be displayed in this case, the electronic device needs to pause displaying the content of the ebook. Then, a corresponding application (for example, an application such as WeChat or Alipay) is started in response to a start operation of a user, and a corresponding two-dimensional code is further displayed in the display interface in response to a related operation of the user. In this manner of displaying a two-dimensional code, there are many operation steps, which results in low efficiency of displaying the two-dimensional code, and the currently performed task needs to be interrupted, which affects user experience. To improve efficiency of displaying the two-dimensional code and improve user experience, embodiments of this application provide a two-dimensional code display method and an electronic device to which the two-dimensional code display method is applied.

The electronic device provided in the embodiments of this application is exemplarily described first. The electronic device may include a handheld device (for example, a mobile phone, a tablet computer, or a personal digital assistant), a vehicle-mounted device (for example, an automobile, an electric vehicle, an aircraft, or a ship), a wearable device (for example, a smartwatch (for example, an iWatch), a smart band, or a pedometer), a smart home device (for example, a refrigerator, a television, an air conditioner, or an electricity meter), an intelligent robot, a workshop device, various forms of user equipment (User Equipment, UE), mobile stations (Mobile station, MS), or terminal equipment (Terminal Equipment), or the like. It may be understood that the description herein is merely an example. A specific form and an implementation of the electronic device is not limited in the embodiments of this application.

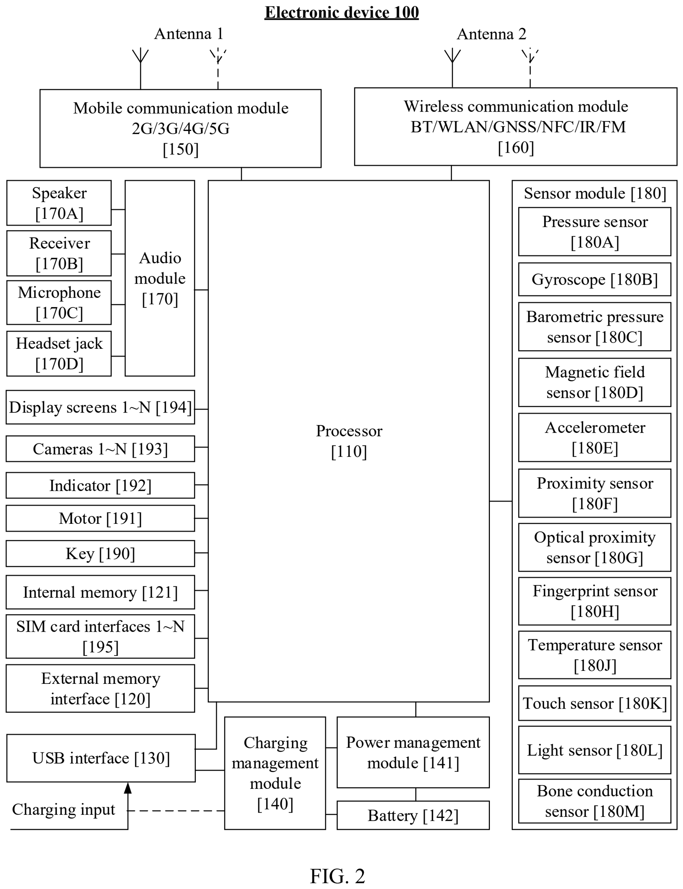

Refer to FIG. 2. FIG. 2 is a schematic diagram of a hardware structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic field sensor 180D, an accelerometer 180E, a proximity sensor 180F, an optical proximity sensor 180G, a fingerprint sensor 180H, a temperature sensor 180J, a touch sensor 180K, a light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light-emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N display screens 194, where N is a positive integer greater than 1.

The electronic device 100 may implement a shooting function by using the ISP, the camera 193, the video codec, the GPU, the display screen 194, the application processor, and the like.

The electronic device 100 may implement an audio function, for example, music playing or sound recording, by using the audio module 170, the speaker 170A, the receiver 170B, the microphone 170C, the headset jack 170D, the application processor, and the like.

The pressure sensor 180A is configured to sense a pressure signal, and may convert the pressure signal into an electrical signal. In some embodiments, the pressure sensor 180A may be disposed on the display screen 194.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic field sensor 180D includes a Hall sensor. The electronic device 100 may detect opening/closing of a flip leather case by using the magnetic field sensor 180D.

The accelerometer 180E may detect magnitudes of acceleration in various directions (usually on three axes) of the electronic device 100, and may detect a magnitude and a direction of gravity when the electronic device 100 is still. The accelerometer 180E may be further configured to recognize a posture of the electronic device, and is applied to applications such as switching between a landscape mode and a portrait mode and a pedometer.

The fingerprint sensor 180H is configured to collect a fingerprint. The electronic device 100 may implement fingerprint unlocking, application lock accessing, fingerprint-based photographing, fingerprint-based incoming call answering, and the like by using a feature of the collected fingerprint.

The touch sensor 180K is also referred to as a "touch panel". The touch sensor 180K may be disposed on the display screen 194. The touch sensor 180K and the display screen 194 form a touchscreen, which is also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180K may alternatively be disposed on a surface of the electronic device 100, at a position different from that of the display screen 194.

The bone conduction sensor 180M may obtain a vibration signal. In some embodiments, the bone conduction sensor 180M may obtain a vibration signal of a vibration bone in a human vocal-cord part.

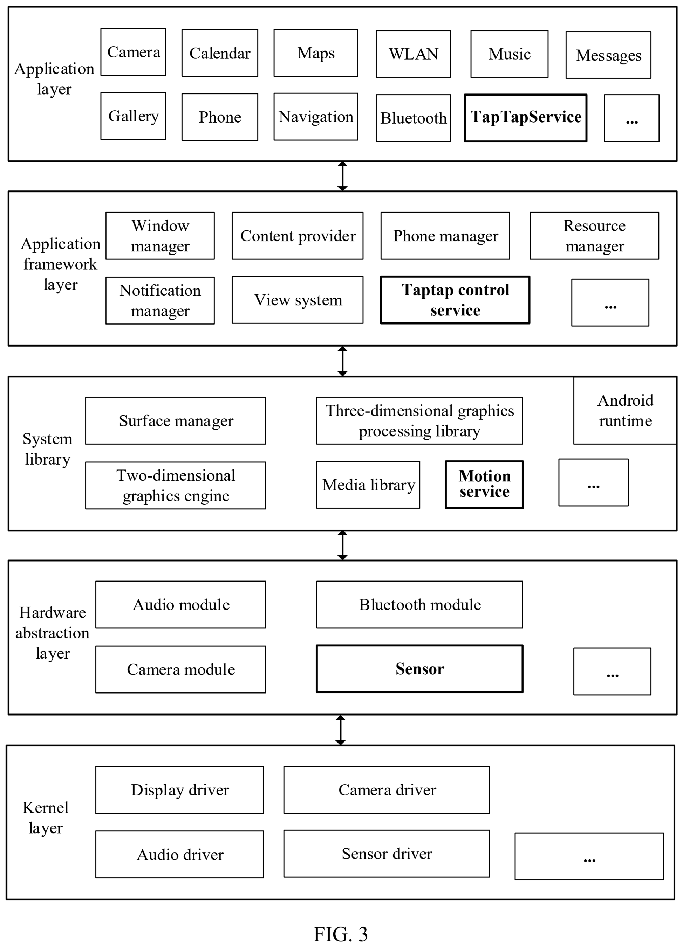

Based on the schematic diagram of a hardware structure of the electronic device 100 according to an embodiment of this application in FIG. 2, the following describes a block diagram of a software structure of the electronic device 100 according to an embodiment of this application, as shown in FIG. 3.

A software system of the electronic device 100 may use a layered architecture, an event-driven architecture, a microkernel architecture, a microservice architecture, or a cloud architecture. In the embodiments of this application, an Android system with a layered architecture is used as an example to describe the software structure of the electronic device 100.

In the layered architecture, software is divided into several layers, and each layer has a clear role and task. The layers communicate with each other through software interfaces. In some embodiments, an Android system is divided into five layers: an application layer, an application framework layer, an Android runtime (Android runtime) and a system library, a hardware abstraction layer (hardware abstraction layer, HAL), and a kernel layer from top to bottom.

The application layer may include a series of application packages.

As shown in FIG. 3, the application packages may include applications such as Camera, Gallery, Calendar, Phone, Maps, Navigation, WLAN, Bluetooth, Music, Messages, and TapTapService (TapTapService).

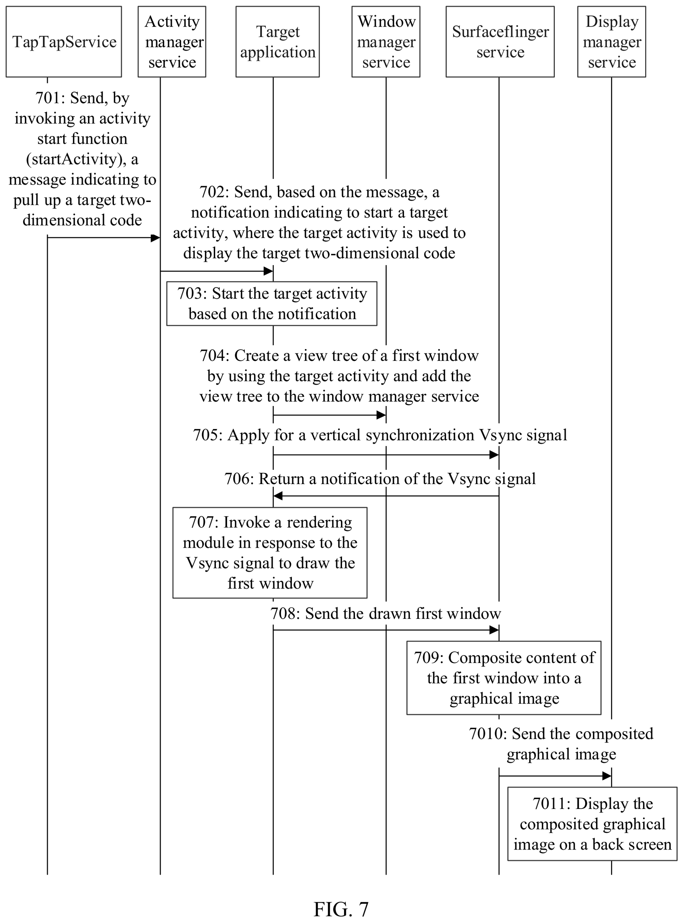

For example, the TapTapService may be used to pull up a target two-dimensional code on a back screen of the electronic device for display. For a specific implementation, refer to the following descriptions in FIG. 7 and a possible implementation thereof. Details are not described herein. For example, the target two-dimensional code may be a payment code, a transport code, any identity verification code, or the like. This is not limited in this embodiment of this application.

The application framework layer provides an application programming interface (application programming interface, API) and a programming framework for an application at the application layer. The application framework layer includes some predefined functions.

As shown in FIG. 3, the application framework layer may include a window manager, a content provider, a phone manager, a resource manager, a notification manager, a view system, a taptap control service (TapTapControlService), and the like.

The window manager is configured to manage a window program. The window manager may obtain a size of a display screen, determine whether a status bar exists, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The phone manager is configured to provide the electronic device 100 with a communication function, for example, call state management (including answering, hanging up, and the like).

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

The view system includes visual controls, for example, a control for displaying a text and a control for displaying a picture. The view system may be configured to build an application. A display interface may include one or more views. For example, a display interface including an SMS message notification icon may include a view for displaying a text and a view for displaying a picture.

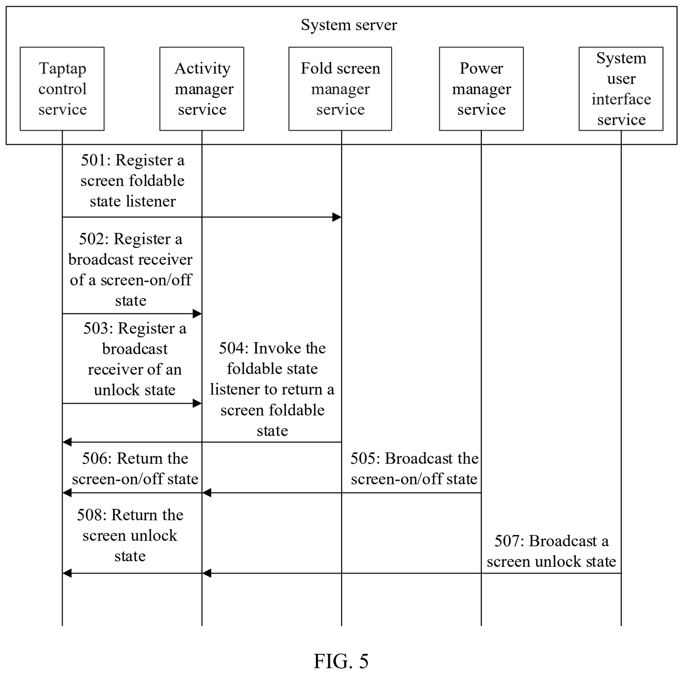

For example, the taptap control service may be used to listen for a screen foldable state and a screen-on/off state, and query a screen unlock state. For a specific implementation, refer to the following descriptions in FIG. 5 and a possible implementation thereof. Details are not described herein.

The Android Runtime includes a kernel library and a virtual machine. The Android runtime is responsible for scheduling and management of an Android system.

The kernel library includes two parts: One part is a functional function that needs to be invoked in a java language, and the other part is a kernel library of Android.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), a 2D graphics engine (for example, an SGL), and a motion service (Motion services) module.

The surface manager is configured to manage a display subsystem, and provide 2D and 3D layer fusion for a plurality of applications.

The media library supports playing and recording in a plurality of common audio and video formats, a still image file, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D graphics drawing.

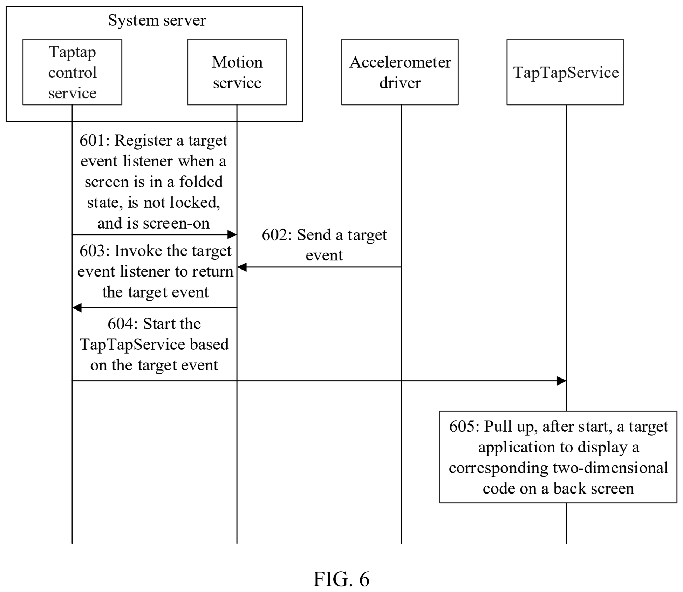

For example, the motion service module may be configured to listen for a target event by using an equipment management service (hwExtDeviceManage). For a specific implementation, refer to the following descriptions in FIG. 6 and a possible implementation thereof. Details are not described herein.

The hardware abstraction layer is an abstraction layer structure between the kernel layer and an upper layer, is an encapsulation of a driver of the kernel layer, and is configured to provide a unified interface for the upper layer. Therefore, an upper-layer application does not need to know how lower-layer hardware specifically works, thereby shielding implementation details of a lower layer.

The hardware abstraction layer may provide a standard interface, to display a device hardware function to the higher-level application framework layer. The hardware abstraction layer includes a plurality of library modules, and each module implements an interface for a particular type of hardware component. The library modules may include an audio (Audio) module, a Bluetooth (bluetooth) module, a camera (Camera) module, sensors (Sensors), and the like. The sensors may include, for example, an accelerometer (accelerometer), a magnetic field (magnetic field) sensor, an orientation (orientation) sensor, a gyroscope (gyroscope), a light (light) sensor, a pressure (pressure) sensor, a temperature (temperature) sensor, and a proximity (proximity) sensor. When the application framework layer requests to access device hardware, the system loads a corresponding library module for the hardware component. A manufacturer may define an interface at the hardware abstraction layer.

For example, the accelerometer may be configured to sense an operation performed on the electronic device (for example, a taptap operation performed on a back screen).

The kernel layer is a layer between hardware and software. The kernel layer includes at least a display driver, a camera driver, an audio driver, and a sensor driver.

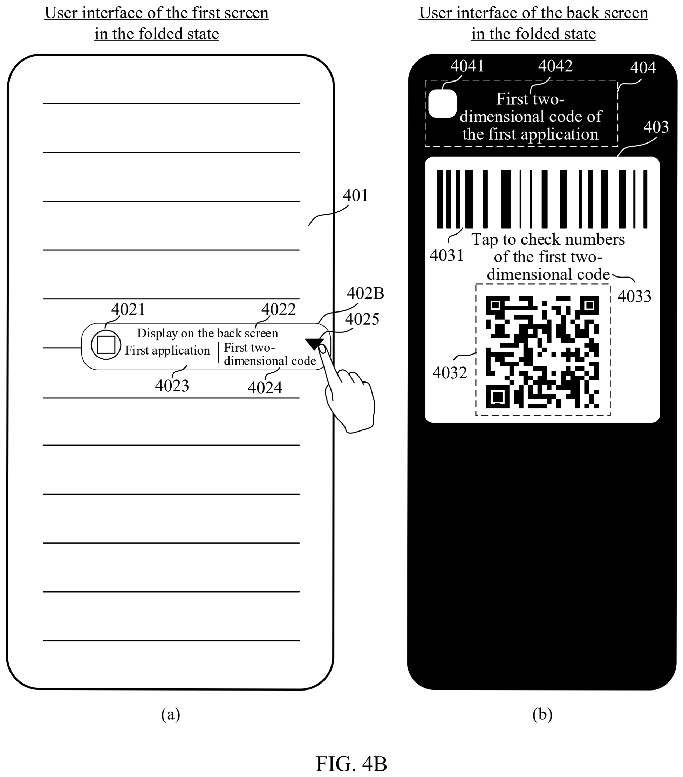

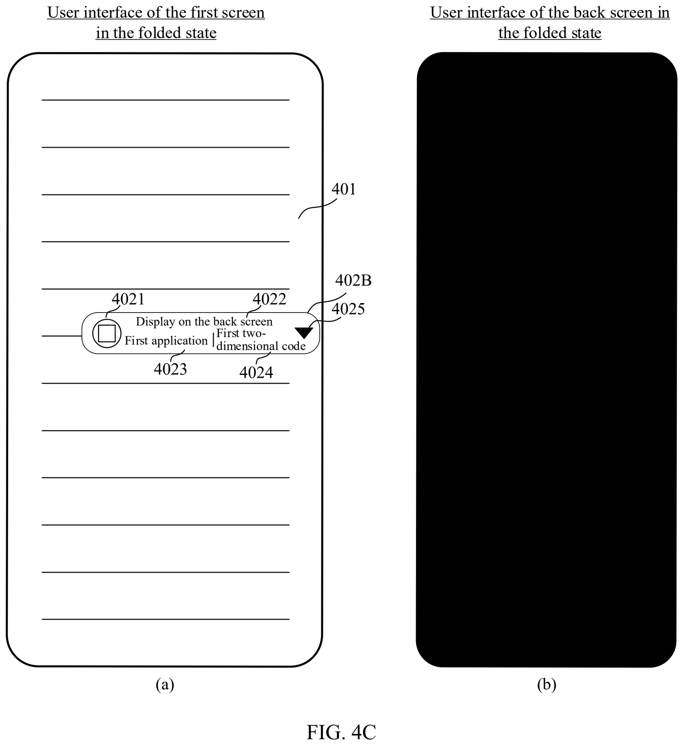

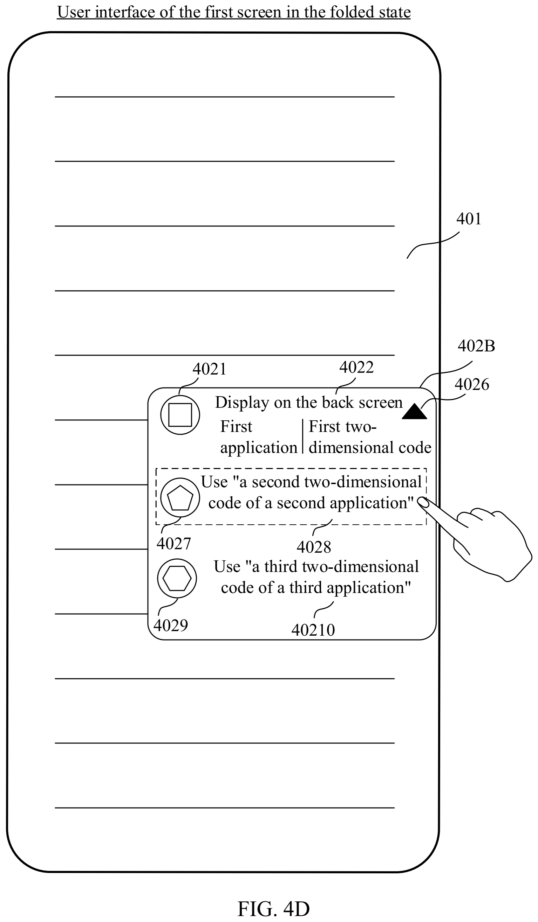

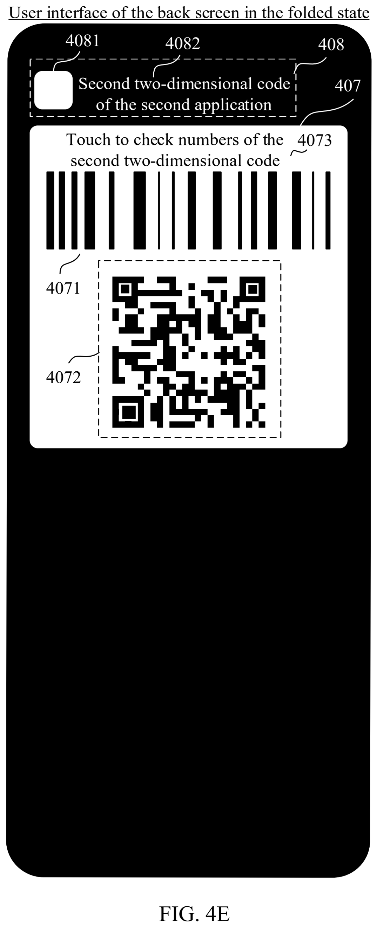

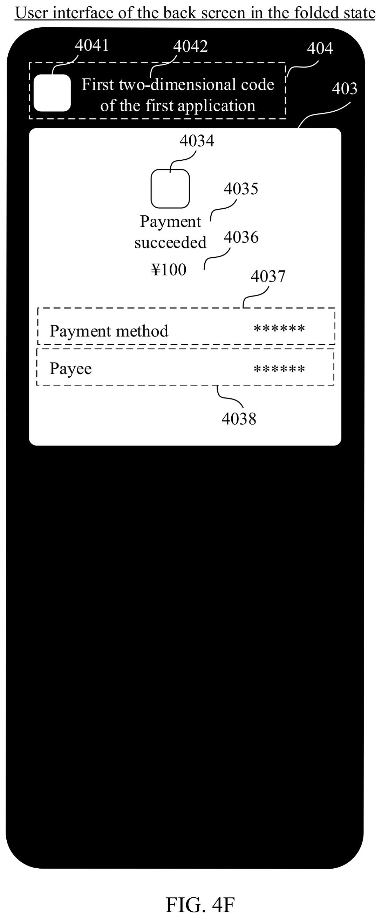

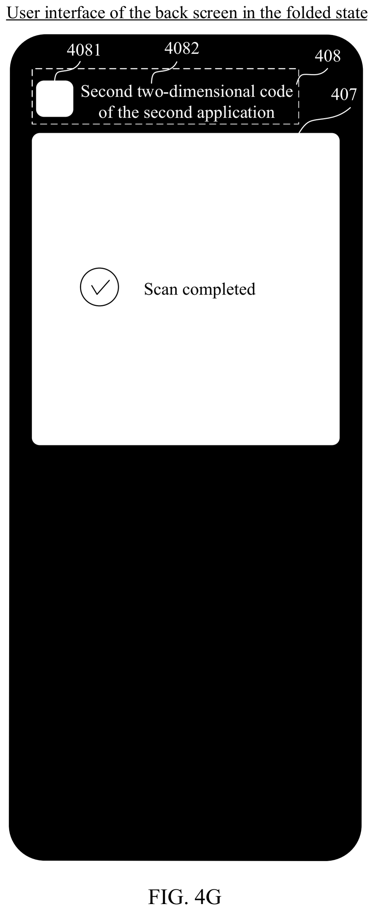

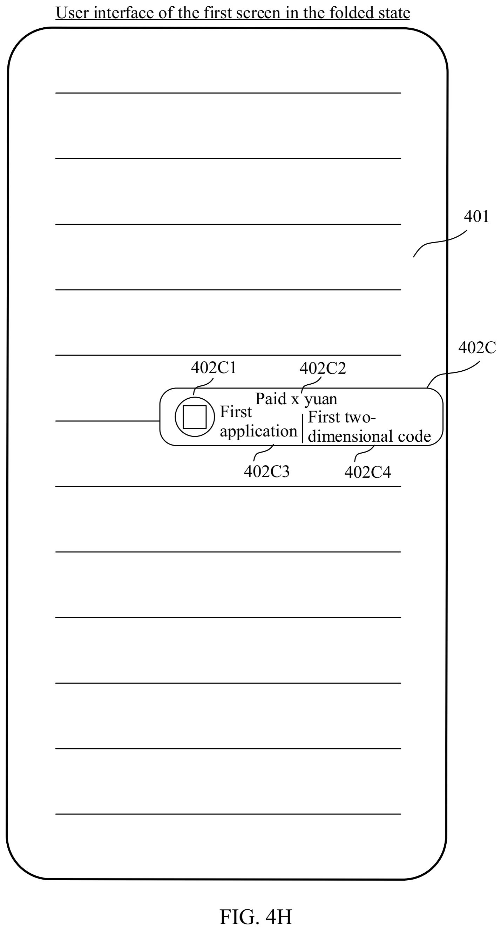

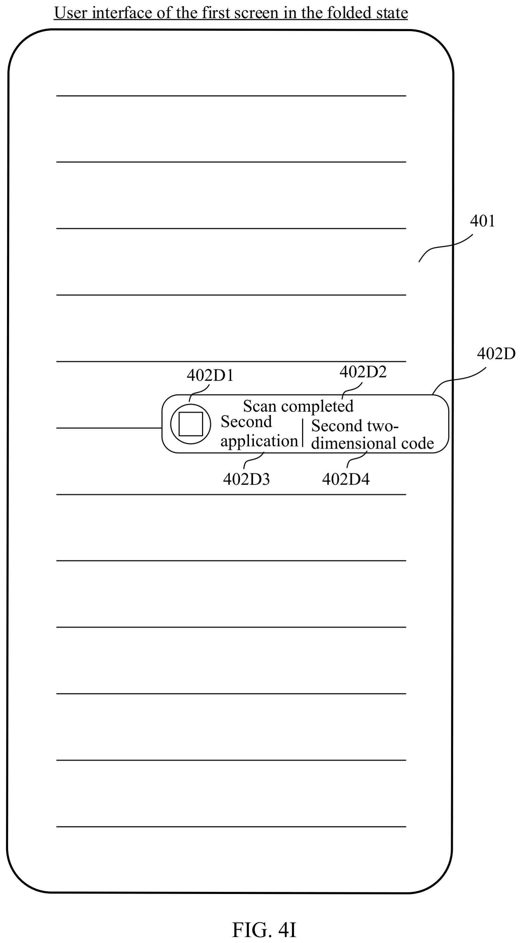

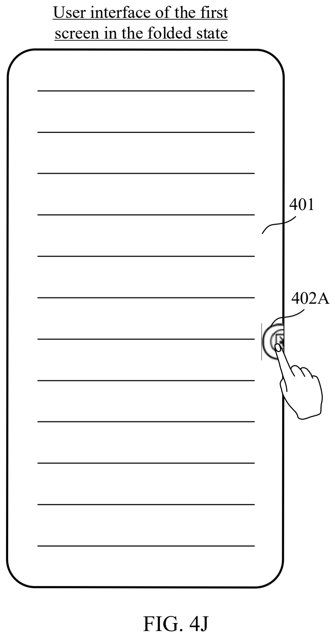

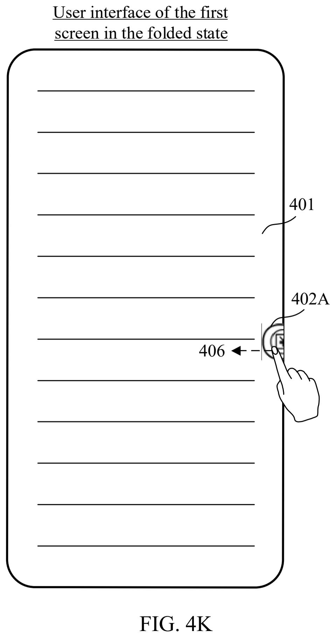

Based on the foregoing exemplarily described electronic device, an embodiment of this application provides a two-dimensional code display method. The method may be applied in a scenario in which an electronic device with an outward foldable screen is in a folded state. For example, the method may be applied in a scenario shown in FIG. 4. In FIG. 4, the electronic device is in the folded state, and a user holds the electronic device by hand. A first screen of the electronic device faces a user, and a second screen of the electronic device faces away from the user. The second screen is referred to as a back screen below. For example, the first screen of the electronic device may display a user interface or a home screen of a specific application (that is, the electronic device is in an unlocked and screen-on state).

Alternatively, in another possible implementation, if security factors such as leakage of information about the user are not considered, the two-dimensional code display method provided in this embodiment of this application can be implemented provided that the electronic device is in the folded state. For example, the two-dimensional code display method can be implemented provided that the electronic device is in the folded state and the electronic device is in a screen-off state but is not locked or the electronic device is in a locked state. However, an example in which the two-dimensional code display method is implemented when the electronic device is in the folded state, is not locked, and is screen-on is used for description below. Screen-on means that the first screen of the electronic device is screen-on, and has the same meaning in the following descriptions. Details are not described again.

Screen-off means that a display screen of the electronic device is screen-off. Screen-off is opposite to screen-on, and screen-on refers to a state in which the display screen of the electronic device is lit up. Lock-screen refers to a protection state set for protecting data security in the electronic device. Lock-screen may further avoid an accidental touch, an accidental press, or the like. After being locked, the electronic device needs to be unlocked by inputting a password or in an another unlocking manner set by the user.

The following exemplarily describes the two-dimensional code display method provided in this embodiment of this application.

First, the following exemplarily describes, with reference to FIG. 4A to FIG. 4K, user interfaces displayed by the electronic device on the display screen in a process of implementing the two-dimensional code display method.

For example, in the scenario shown in FIG. 4, that is, when the electronic device is in the folded state, is not locked, and is screen-on, the electronic device may detect a target operation. The target operation may be, for example, a taptap operation performed by the user on the back screen of the electronic device, may be a single-tap operation performed by the user on the back screen of the electronic device, or may be an operation performed by the user on the back screen of the electronic device to slide after a single tap. Alternatively, the target operation may be an operation of tapping, sliding, or dragging the first screen of the electronic device and any combination thereof. It may be understood that the target operation may be preset, and may be specifically any preset operation. This is not limited in this embodiment of this application. For example, the electronic device may detect the target operation by using an accelerometer. For example, the taptap operation may be, for example, a taptap operation performed within preset duration. The preset duration may be 0.5 second, 1 second, 2 seconds, or the like. This is not limited in this embodiment of this application.

For example, when the electronic device is in the folded state, is not locked, and is screen-on, user interfaces of the first screen and the back screen may be shown in (a) and (b) in FIG. 4A respectively. It can be seen from (a) in FIG. 4A that the user interface of the first screen may display an operable control 402A on an interface 401 originally displayed on the first screen. The operable control 402A is a hidden state of a floating window 402B. The operable control 402A may invoke the floating window 402B in response to an operation of the user. For details, refer to the following description. Details are not described herein. It can be seen from (b) in FIG. 4A that the back screen is a black screen, that is, does not display a user interface of any application.

In a possible implementation, the target operation takes a first operation as an example. The first operation may be the taptap operation or the like performed on the back screen of the electronic device. When the first screen and the back screen of the electronic device are shown in FIG. 4A, the electronic device may display the floating window 402B on the first screen in response to the first operation (for example, as shown in (a) in FIG. 4B) and display a target two-dimensional code on the back screen (for example, as shown in (b) in FIG. 4B). (a) in FIG. 4B and (b) in FIG. 4B are shown by using an example in which the target two-dimensional code is a first two-dimensional code of a first application. The first application may be any application that can present a two-dimensional code such as a payment code or a transport code. This is not limited in this embodiment of this application.

(a) in FIG. 4B is a schematic diagram of a user interface of the first screen that displays the floating window 402B. It can be seen from (a) in FIG. 4B that the electronic device may display, in response to the first operation, the floating window 402B on the interface 401 originally displayed on the first screen. The floating window 402B may indicate to display the first two-dimensional code of the first application on the back screen. The floating window 402B may include an icon 4021 of the first application, a text 4022 indicating to display a two-dimensional code on the back screen, a name 4023 of the first application, a type 4024 of the displayed two-dimensional code, and a pull-down control 4025.

The icon 4021 of the first application is merely an example, and does not constitute a limitation on this embodiment of this application. Icons shown in the accompanying drawings of the embodiments of this application are all examples. Details are not described again.

The text 4022 is, for example, "Display on the back screen". This is not limited in this embodiment of this application. In a specific implementation, the text 4022 may alternatively be another text indicating to display the two-dimensional code on the back screen. This is not limited in this embodiment of this application.

The type 4024 of the two-dimensional code may include a payment code, a receive code, a transport code, an identity verification code, any possible two-dimensional code in the future, or the like. This is not limited in this embodiment of this application.

The pull-down control 4025 may be used to display more selectable two-dimensional code types in the floating window 402B, and a selected two-dimensional code may be displayed on the back screen. For application of the pull-down control 4025, refer to related description in FIG. 4D and FIG. 4E. Details are not described herein.

(b) in FIG. 4B is a schematic diagram of a user interface displaying the first two-dimensional code of the first application on the back screen. It can be seen from (b) in FIG. 4B that a background of the back screen is black, and a region 403 in which the first two-dimensional code of the first application is displayed is white. The region 403 may include a payment barcode 4031, a payment two-dimensional code 4032, and a text 4033 indicating to display numbers of the first two-dimensional code. The text 4033 may be, for example, "Tap to check numbers of the first two-dimensional code". Specific content of the text is not limited in this embodiment of this application. For example, the user interface of the first two-dimensional code of the first application may further include a description 404 of the first two-dimensional code. The description 404 may include, for example, an icon 4041 of the first application and a name 4042 of the displayed two-dimensional code. The name 4042 of the two-dimensional code may be, for example, "First two-dimensional code of the first application". Text description of the name of the two-dimensional code is not limited in this embodiment of this application. For example, it is assumed that the first two-dimensional code is a transport code, and the name 4042 of the two-dimensional code may be "Transport code of the first application". For another example, it is assumed that the first two-dimensional code is a payment code, and the name 4042 of the two-dimensional code may be "Payment code of the first application". Description of a name of a two-dimensional code below is the same. Details are not described again.

Refer to (a) in FIG. 4B. In a possible implementation, the electronic device may expand the floating window 402B in response to a tap operation performed by the user on the pull-down control 4025, to display more selectable two-dimensional code types. For example, for the expanded floating window 402B, exemplarily refer to FIG. 4D. In FIG. 4D, the floating window 402B further includes an option of a second two-dimensional code of a second application and an option of a transport code of a third application. For example, the floating window 402B may include an icon 4027 of the second application and a text 4028 indicating to select the second two-dimensional code of the second application. The text 4028 is, for example, "Use 'a second two-dimensional code of a second application‴. This is not limited in this embodiment of this application. The floating window 402B further includes an icon 4029 of the third application and a text 40210 indicating to select the transport code of the third application. The text 40210 is, for example, "Use 'a transport code of a third application‴. This is not limited in this embodiment of this application.

In a possible implementation, in the expanded floating window 402B shown in FIG. 4D, the electronic device may display the second two-dimensional code of the second application on the back screen in response to a tap operation performed by the user on a display region of the icon 4027 and/or the text 4028. Exemplarily refer to FIG. 4E. FIG. 4E is a schematic diagram of a user interface displaying the second two-dimensional code of the second application on the back screen.

It can be seen from FIG. 4E that the background of the back screen is black, and a background of a region 407 in which the second two-dimensional code of the second application is displayed is white. The region 407 may include a payment barcode 4071, a payment two-dimensional code 4072, and a text 4073 indicating to display numbers of the second two-dimensional code. The text 4073 may be, for example, "Touch to check numbers of the second two-dimensional code". Specific content of the text is not limited in this embodiment of this application. For example, the user interface displaying the second two-dimensional code of the second application may further include a description 408 of the second two-dimensional code. The description 408 may include, for example, an icon 4081 of the second application and a name 4082 of the displayed two-dimensional code. The name 4082 of the two-dimensional code may be, for example, "Second two-dimensional code of the second application". Text description of the name of the two-dimensional code is not limited in this embodiment of this application.

For an implementation of selecting the transport code of the third application in the expanded floating window 402B and displaying the transport code on the back screen, refer to related description of the second two-dimensional code of the second application. Details are not described herein.

In addition, it can be further seen from FIG. 4D that the expanded floating window 402B further includes a pull-up control 4026. The pull-up control 4026 may collapse the expanded floating window 402B. For example, the electronic device may collapse the expanded floating window 402B in response to a tap operation performed by the user on the pull-up control 4026. For the collapsed floating window 402B, exemplarily refer to (a) in FIG. 4B.

In another possible implementation, in the user interface shown in FIG. 4D, the electronic device may collapse the expanded floating window 402B in response to a tap operation performed by the user on any position other than the expanded floating window 402B. For the collapsed floating window 402B, exemplarily refer to (a) in FIG. 4B.

It may be understood that the expanded floating window 402B shown in FIG. 4D is merely an example, and does not constitute a limitation on this embodiment of this application. In a specific implementation, the selectable two-dimensional code type included in the expanded floating window 402B may be a two-dimensional code of another application or another two-dimensional code type. This is not limited in this embodiment of this application.

In a possible implementation, after the two-dimensional code shown in (b) in FIG. 4B (or FIG. 4E) is successfully scanned, the electronic device may display information such as "Scan completed" or "Payment succeeded" in the region 403 shown in (b) in FIG. 4B(or in the region 407 shown in FIG. 4E), to indicate that the two-dimensional code is successfully scanned. Optionally, successful scanning of the two-dimensional code may also represent that a corresponding operation is completed (for example, a payment operation). This is not limited in this embodiment of this application. For example, refer to FIG. 4F and FIG. 4G. "Scanning of the two-dimensional code is successful or completed" means that the two-dimensional code is successfully scanned by another device.

FIG. 4F shows a user interface displayed on the back screen after interface transition after the two-dimensional code shown in (b) in FIG. 4B is successfully scanned. It can be seen that the user interface obtained after transition may include information such as an icon 4034 of the first application, a text 4035 "Payment succeeded", a payment amount (exemplified as 100 yuan) 4036, a payment method 4037, and a payee 4038.

FIG. 4G shows a user interface displayed on the back screen after interface transition after the two-dimensional code shown in FIG. 4E is successfully scanned. It can be seen that the user interface obtained after transition may display information "Scan completed".

It may be understood that FIG. 4F and FIG. 4G are merely examples, and do not constitute limitations on this embodiment of this application. In a specific implementation, the interface obtained after transition after the two-dimensional code is successfully scanned may be another user interface. This is not limited in this embodiment of this application. Alternatively, the user interface obtained after transition may display another interface element. This is not limited in this embodiment of this application.

The back screen of the electronic device may be turned off after interface transition (for example, after the user interface shown in each of FIG. 4F and FIG. 4G is displayed) after the two-dimensional code shown in (b) in FIG. 4B(or FIG. 4E) is successfully scanned. Turn-off of the back screen may be that the back screen is in a black screen state or the back screen displays a black background, for example, as shown in (b) in FIG. 4A. Alternatively, turn-off of the back screen may be that the back screen does not perform display.

In another possible implementation, after the two-dimensional code shown in (b) in FIG. 4B (or FIG. 4E) is successfully scanned, the first screen of the electronic device may display a floating window indicating that payment is completed or scanning is completed. For example, exemplarily refer to FIG. 4H and FIG. 4I.

FIG. 4H is a schematic diagram of a user interface of the first screen after the two-dimensional code shown in (b) in FIG. 4B is successfully scanned. It can be seen that the user interface displays a floating window 402C. The floating window 402C may include an icon 402C1 of the first application, a text 402C2 indicating that payment is completed, a name 402C3 of the first application, and a type 402C4 of the displayed two-dimensional code (for example, a payment code or a transport code). For example, the text 402C2 indicating that payment is completed may further indicate that a payment amount is "x yuan", as shown in FIG. 4H.

FIG. 4I is a schematic diagram of a user interface of the first screen after the two-dimensional code shown in FIG. 4E is successfully scanned. It can be seen that the user interface displays a floating window 402D. The floating window 402D may include an icon 402D1 of the second application, a text 402D2 indicating that scanning is completed, a name 402D3 of the second application, and a type 402D4 of the displayed two-dimensional code (for example, a payment code or a transport code).

In a possible implementation, the floating window 402C or the floating window 402D disappears after being displayed for preset duration. The preset duration may be, for example, 3 seconds, 5 seconds, or 8 seconds. This is not limited in this embodiment of this application.

It may be understood that the floating windows shown in FIG. 4H and FIG. 4I are merely examples, and do not constitute limitations on this embodiment of this application. In a specific implementation, the floating window may display another interface element or other content. This is not limited in this embodiment of this application.

In another possible implementation, after the two-dimensional code shown in (b) in FIG. 4B (or FIG. 4E) is successfully scanned, an interface obtained after transition after successful scanning is not displayed on the back screen (for example, the user interfaces in FIG. 4F and FIG. 4G are not displayed). The back screen directly changes into a black screen, for example, as shown in (b) in FIG. 4A.

In another possible implementation, in the case shown in FIG. 4A, the electronic device may further display the floating window 402B on the first screen (for example, as shown in (a) in FIG. 4B) and display the target two-dimensional code on the back screen (for example, as shown in (b) in FIG. 4B) in response to a second operation performed by the user on the first screen. That is, the target operation is the second operation. The second operation may include a tap operation (or an operation of pressing and sliding) for the operable control 402A in (a) in FIG. 4A and a selection operation for the target two-dimensional code. The following provides exemplary description.

For example, refer to FIG. 4J. The electronic device may display the floating window 402B on the first screen in response to the tap operation performed by the user on the operable control 402A, as shown in (a) in FIG. 4C. In addition, in this case, the back screen is a black screen, and the two-dimensional code is not displayed, as shown in (b) in FIG. 4C.

For example, refer to FIG. 4K. The electronic device may display the floating window 402B on the first screen in response to the operation of pressing and sliding performed by the user on the operable control 402A, as shown in (a) in FIG. 4C. In addition, in this case, the back screen is a black screen, and the two-dimensional code is not displayed, as shown in (b) in FIG. 4C. A direction of sliding may be, for example, a direction shown by 406 in FIG. 4K.

In the user interface shown in (a) in FIG. 4C, the electronic device may display the first two-dimensional code of the first application on the back screen in response to the selection operation performed by the user on the first two-dimensional code of the first application. For the user interface displaying the first two-dimensional code of the first application on the back screen, exemplarily refer to (b) in FIG. 4B. For example, the selection operation may be, for example, a tap operation performed by the user at a position in which the icon 4021, the name 4023 of the first application, or the type 4024 of the displayed two-dimensional code is located.

In another possible implementation, if the user wants to select another two-dimensional code for display on the back screen, reference may be made to related description of FIG. 4D and FIG. 4E. Details are not described herein.

In another possible implementation, the back screen of the electronic device may be turned off after the two-dimensional code displayed on the back screen is successfully scanned. For a specific implementation, refer to related description of FIG. 4F to FIG. 4I. Details are not described herein.

In a possible implementation, in the user interface shown in (a) in FIG. 4B, (a) in FIG. 4C, or FIG. 4D, if the electronic device does not receive an operation of the user by using the floating window 402B after preset duration, for example, the user does not tap or touch any position of the floating window 402B within preset duration, the electronic device may hide the floating window 402B. For a user interface after hiding, exemplarily refer to (a) in FIG. 4A. For example, the preset duration may be, for example, 3 seconds, 5 seconds, or 8 seconds. This is not limited in this embodiment of this application.

In a possible implementation, if the electronic device is in the unfolded state, the locked state, or the screen-off state, the first screen does not display the operable control 402A and does not display the floating window 402B. In addition, no response is made even if the electronic device receives the first operation from the user. That is, the target two-dimensional code is not displayed on the second screen. In addition, because the first screen does not display the operable control 402A and the floating window 402B, the electronic device cannot receive the second operation. That is, display of the target two-dimensional code is not triggered when the electronic device is in the unfolded state, the locked state, or the screen-off state.

The following further exemplarily describes an implementation process of the two-dimensional code display method provided in this embodiment of this application. The following implementation process is mainly described by using an example in which the target operation is the first operation.

In a possible implementation, it can be learned based on the foregoing description that the user interface described above is displayed only when the electronic device is in the folded state, is not locked, and is screen-on. Therefore, the electronic device may register a listener (listener) in a system server (system server) to listen for a screen foldable state and register a broadcast receiver (broadcast receiver) to receive a screen-on/off state, and query a screen unlock state. After obtaining a specific screen foldable state, a specific screen-on/off state, and a specific screen unlock state, the electronic device may determine, based on these states, whether to register a target event listener. A target event is an input event of the target operation. The target event listener may listen for occurrence of the target event. Only after the target event occurs, the electronic device is triggered to perform the procedure of displaying the floating window and/or the target two-dimensional code. A specific implementation procedure is exemplarily described below with reference to FIG. 5 and FIG. 6. First, refer to a procedure shown in FIG. 6. The procedure shown in FIG. 6 may include but is not limited to the following steps.

601: When a screen is in a folded state, is not locked, and is screen-on, a taptap control service registers a target event listener with a motion service.

For example, the motion service (Motion services) is also a service subthread in the foregoing system service process. The motion service may identify a motion operation performed on the electronic device.

In a specific implementation, the taptap control service may obtain a specific screen foldable state, a specific screen-on/off state, and a specific screen unlock state of the electronic device. For example, the states may be obtained, for example, by using the procedure shown in FIG. 5. For details, refer to related description of FIG. 5. Details are not described herein.

After the taptap control service obtains the specific screen foldable state, whether the specific screen foldable state is a folded state may be determined through comparison. After the taptap control service obtains the specific screen-on/off state, whether the specific screen-on/off state is a screen-on state may be determined through comparison. After the taptap control service obtains the specific screen unlock state, whether the specific screen unlock state is an unlocked state, that is, an unlocked state, may be determined through comparison.

In a possible implementation, the taptap control service does not register the target event listener with the motion service when the screen is in an unfolded state, a locked state, or a screen-off state. Alternatively, when the screen is in an unfolded state, a locked state, or a screen-off state, if the target event listener is already registered, the taptap control service may request the motion service to unregister the registered target event listener. For example, the taptap control service may unregister the registered target event listener by invoking a device listener unregistration function unregisterDeviceListner().

In a possible implementation, the taptap control service may register the target event listener with the motion service when the screen is in the folded state, is not locked, and is screen-on. For example, registration of the target event listener may be implemented by using a device listener registration function registerDeviceListner(). For example, if the target event listener is already registered when the screen is in the folded state, is not locked, and is screen-on, repeated registration is not performed. For example, whether the target event listener is registered may be determined by querying whether a listener list in the motion service includes information about the target event listener. If the listener list includes the information about the target event listener, it indicates that the target event listener is already registered. If the listener list does not include the information about the target event listener, it indicates that the target event listener is not registered.

For example, in a specific implementation, the target event listener may be registered or unregistered with an equipment management service (hwExtDeviceManage) in the motion service. The equipment management service may obtain an input event of a motion operation detected by a sensor.

For example, if one of the screen foldable state, the screen-on/off state, and the screen unlock state changes, the taptap control service is triggered to determine whether the screen is in the folded state, is not locked, and is screen-on. Further, whether to register or unregister the target event listener is determined.

602: An accelerometer driver sends a target event to the motion service.

After the taptap control service registers the target event listener with the motion service, if the target operation occurs, an accelerometer of the electronic device may detect an input event of the target operation. For example, in a specific implementation, a system invokes a sensor driver, so that a hardware accelerometer first receives the input event of the target operation; and then the system invokes an accelerometer interface of a hardware abstraction layer to identify the input event as the target event by using a preset algorithm. The preset algorithm may be, for example, a taptap (TapTap) algorithm. This is not limited in this embodiment of this application.

The accelerometer interface of the hardware abstraction layer identifies the target event, and may send the target event to the motion service. For example, in a specific implementation, the accelerometer interface of the hardware abstraction layer sends the target event to the equipment management service in the motion service.

603: The motion service invokes the target event listener to return the target event to the taptap control service.

After receiving the target event, the motion service may invoke the target event listener by using the equipment management service, so that the target event is returned to the taptap control service after a method in the invoked target event listener is performed.

604: The taptap control service starts TapTapService based on the target event.

The taptap control service may start the TapTapService after receiving the target event. The TapTapService is an application provided in this embodiment of this application, and is used to display the foregoing target two-dimensional code on the back screen.

605: A target application is pulled up after the TapTapService is started.

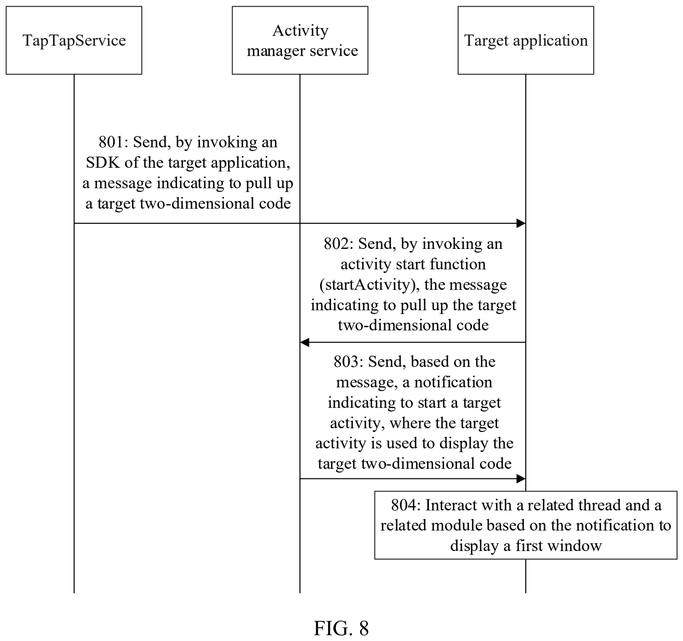

A corresponding two-dimensional code may be displayed on the back screen after the target application is pulled up. For this implementation process, exemplarily refer to related description of FIG. 7 or FIG. 8. Details are not described herein.

For example, the target application may be a preset application corresponding to a two-dimensional code displayed on the back screen by default. Alternatively, in another possible implementation, the target application may be an application corresponding to a two-dimensional code that is selected by the user in the floating window and that is displayed on the back screen.

For example, a process in which the taptap control service obtains the specific screen foldable state, the specific screen-on/off state, and the specific screen unlock state of the electronic device is described below with reference to FIG. 5. Refer to the schematic flowchart shown in FIG. 5. A procedure shown in FIG. 5 may include but is not limited to the following steps.

501: The taptap control service registers a screen foldable state listener with a fold screen manager service.

For example, the taptap control service is a service subthread added to the system service process in this embodiment of this application. The taptap control service may register the screen foldable state listener and a screen-on/off state listener to obtain state data detected by the listeners, and/or query the screen unlock state. The screen foldable state listener may listen for whether the screen is in the folded state or the unfolded state. The screen-on/off state listener may listen for whether the screen is in the screen-on state or the screen-off state.

Registration refers to registering information about a listener with an event source object, so that when a listened event occurs, the event source object can find the listener in the registered listener list and correspondingly invokes a method of the listener for processing.

The fold screen manager (fold screen manager) service is also a service subthread in the system service process. The fold screen manager service may manage the folded state or the unfolded state of the display screen of the electronic device.

In a specific implementation, in a startup process of the electronic device, the system service process executes a startOtherServices (startOtherServices) thread to start other system sub-services. In this embodiment of this application, the startOtherServices thread may pull up, that is, start, the taptap control service. After being started, the taptap control service may register the screen foldable state listener with the fold screen manager service. In this case, when the screen of the electronic device switches from the folded state to the unfolded state and/or when the screen of the electronic device switches from the unfolded state to the folded state, specific state information may be returned to the taptap control service.

For example, the taptap control service may register the screen foldable state listener with the fold screen manager service by using a foldable state registration function registerfoldablestate().

502: The taptap control service registers a broadcast receiver of the screen-on/off state with an activity manager service.

For example, the activity manager service (activity manager service, AMS) is mainly responsible for managing active tasks and lifecycles of all applications. When an application is opened, the AMS starts a process of the application, and allocates processor resources and memory to the application.

In this embodiment of this application, after being started, the taptap control service may register the broadcast receiver of the screen-on/off state with the AMS. In this case, when the screen of the electronic device switches from the screen-on state to the screen-off state and/or when the screen of the electronic device switches from the screen-off state to the screen-on state, specific screen-on/off state information may be returned to the taptap control service.

For example, the broadcast receiver of the screen-off state may be implemented as a screen change receiver (Screenchangereceiver) or the like.

503: The taptap control service registers a broadcast receiver of the unlock state with the activity manager service.

In a specific implementation, the screen unlock state may be broadcast by a system user interface (system user interface, systemUI) service. For example, the system user interface (system user interface, systemUI) service is also a service subthread in the system service process. The system user interface service can implement notification message alert tones, presentation of a system status bar, presentation of a navigation bar, display of a system or application notification content, screen locking, control and management of a dividing line for screen splitting, provision of management for a picture-in-picture mode, and the like.

The activity manager service may receive broadcast of the unlock state. Therefore, after being started, the taptap control service may register the broadcast receiver of the unlock state with the activity manager service. For example, the broadcast receiver may be invoked after the activity manager service receives broadcast information from the system user interface service, to return the screen unlock state to the taptap control service.

504: The fold screen manager service invokes the foldable state listener to return the screen foldable state to the taptap control service.

In a specific implementation, after the taptap control service registers the screen foldable state listener with the fold screen manager service, if the screen of the electronic device switches from the folded state to the unfolded state and/or the screen of the electronic device switches from the unfolded state to the folded state, the fold screen manager service invokes the foldable state listener to return the specific screen foldable state to the taptap control service.

505: A power manager service broadcasts the screen-on/off state.

For example, the power manager service (power manager service, PMS) is also a service subthread in the system service process. The power manager service is responsible for power management of the system, for example, for lighting up the screen, turning off the screen, or entering a screen saver.

In a specific implementation, a service in which the broadcast receiver that receives the screen-on/off state broadcast by the power manager service is registered may receive the broadcast screen-on/off state. The broadcast receiver of the screen-on/off state is registered in the activity manager service. Therefore, the activity manager service may receive the broadcast screen-on/off state.

506: The activity manager service returns the screen-on/off state to the taptap control service.

In a specific implementation, the broadcast receiver of the screen-on/off state is registered with the activity manager service by the taptap control service. After receiving the broadcast screen-on/off state from the power manager service, the activity manager service may transmit the screen-on/off state to the broadcast receiver. The broadcast receiver then transmits the specific screen-on/off state to the taptap control service.

507: The system user interface service broadcasts the screen unlock state.

508: The activity manager service returns the screen unlock state to the taptap control service.

In a specific implementation, the system user interface service may broadcast the specific screen unlock state. After receiving the broadcast screen unlock state, the AMS may transmit the unlock state to the broadcast receiver of the unlock state. The broadcast receiver may then send the specific screen unlock state to the taptap control service.

It may be understood that an execution sequence of step 501 to step 503 is not limited, and an execution sequence of step 504 to step 508 is not limited. In addition, description of obtaining the screen foldable state, the screen-on/off state, and the screen unlock state by the taptap control service is merely an example. In a specific implementation, the taptap control service may alternatively obtain the state information by using a callback function or in another manner. This is not limited in this embodiment of this application.

For example, the following describes, with reference to FIG. 7 and FIG. 8, an implementation process of pulling up the target application to display a corresponding two-dimensional code on the back screen.

In a possible implementation, the target application may be pulled up by using a procedure shown in FIG. 7 to display the corresponding two-dimensional code on the back screen. The procedure shown in FIG. 7 includes but is not limited to the following steps.

701: The TapTapService sends, to the activity manager service by invoking an activity start function (startActivity), a message indicting to pull up the target two-dimensional code.

For example, the target two-dimensional code is the two-dimensional code displayed on the back screen by default or the two-dimensional code selected by the user to be displayed on the back screen. The user interface of the target two-dimensional code may be displayed by starting an activity (Activity).

The message sent to the AMS may be carried by an intent (Intent) parameter. The intent parameter specifies a to-be-started activity (briefly referred to as a target activity), that is, the intent parameter includes a data description of the target activity. The AMS can create a corresponding activity record (ActivityRecord) by parsing the intent parameter, and then can continue a subsequent activity start process.

In addition, for example, in this embodiment of this application, the target two-dimensional code is requested to be displayed on the back screen of the electronic device. The message sent by the TapTapService to the AMS further carries identification information (for example, an application name or a preset unique number) of a sender, that is, the TapTapService. Therefore, after receiving the message, the AMS may determine, based on the identification information of the sender in the message, whether the message is a message sent by the TapTapService. If the message is a message sent by the TapTapService, a display region associated with the target activity is adjusted, and the display region of the target activity is set to be the back screen. Therefore, when a window is subsequently created based on the target activity to display the target two-dimensional code, a display region of the window is the back screen.

702: The activity manager service sends, to the target application based on the message, a notification indicating to start the target activity, where the target activity may be used to display the target two-dimensional code.

After creating the activity record based on the received message, the AMS may first determine whether an application process (that is, the target application process) indicated by the activity record exists. If the target application process does not exist, the target application process may be started first, and then the notification indicating to start the target activity is sent to the target application. If the target application process exists, the notification indicating to start the target activity is directly sent to the target application.

703: The target application starts the target activity based on the notification.

After receiving the notification from the AMS, the target application creates a corresponding activity thread (ActivityThread), to start the target activity.

For example, the activity thread may start the target activity by invoking functions such as onCreate() and onResume().

704: The target application creates a view tree of a first window by using the target activity and adds the view tree to a window manager service.

For example, the window manager service (window manager service, WMS) is also a service subthread in the system service process. The window manager service can implement at least functions such as window management, window animation, or assisting an input system in receiving an input event.

After the target activity is started, the view (view) tree of the first window may be created by using the target activity and the view tree is added to the WMS. The first window may display the target two-dimensional code. For example, the first window displays the user interface of the target application, and the user interface includes the target two-dimensional code. For example, if the target two-dimensional code is a payment code of a specific application, the first window displays a payment code interface of the application. For another example, if the target two-dimensional code is a transport code of a specific application, the first window displays a transport code interface of the application. It may be understood that this is merely an example and does not constitute a limitation on this embodiment of this application.

For example, the view tree of the first window may be added to the window manager service by invoking a setview() function. For example, the setview() function may invoke an Addwindow() function to add the view tree of the first window to the window manager service. In addition, the setview() function may further invoke a requestlayout() function to lay out the first window.

705: The window manager service applies to a surfaceflinger service for a vertical synchronization Vsync signal.

For example, the surfaceflinger (Surface flinger) service is also a system service. The surfaceflinger service can assist and cooperate with the WMS to implement window management.

After the view tree is added to the WMS, the WMS may applies to the surfaceflinger service for the vertical synchronization Vsync signal for screen refresh. The VSync signal can synchronize frames per second (frames per second, FPS), that is, a frame rate, and a screen refresh rate, to avoid a picture "tearing" phenomenon. If there is no VSync signal, when rendering of frame data is fast, and screen refresh cannot keep up with rendering, a specific frame may be currently displayed but another frame is triggered to be displayed on the screen, resulting in the picture "tearing" phenomenon.

706: The surfaceflinger service returns a notification of the Vsync signal to the target application.

When a next VSync signal arrives, the surfaceflinger service returns the notification of the Vsync signal to the target application.

707: The target application invokes a rendering module in response to the Vsync signal to draw the first window.

After the target application receives the notification, the rendering module may be invoked, for example, a ViewRootlmpl#performTraversals() function is invoked, to draw the first window. For example, the performTraversals() function may invoke functions such as performdraw() to draw the first window.

708: The target application sends the drawn first window to the surfaceflinger service.

After obtaining the drawn first window, the target application may send the first window to the surfaceflinger service.

709: The surfaceflinger service composites content of the first window into a graphical image.

After receiving the drawn first window, the surfaceflinger service may perform graphical composition on the first window. The composited graphical image includes the target two-dimensional code.

7010: The surfaceflinger service sends the composited graphical image to a display manager service.

For example, the display manager (DisplayManager) service is also a system service, and may manage a lifecycle of window display.

7011: The display manager service displays the composited graphical image on the back screen.

The display region of the target active is already set to be the back screen in step 701. The first window is a window of the target activity. Therefore, the display manager service displays, on the back screen, the graphical image composited based on the first window. Therefore, the target two-dimensional code may be displayed on the back screen.

In another possible implementation, the target application may be pulled up by using a procedure shown in FIG. 8 to display the corresponding two-dimensional code on the back screen. The procedure shown in FIG. 8 includes but is not limited to the following steps.

801: The TapTapService sends, to the target application by invoking an SDK of the target application, a message indicating to pull up the target two-dimensional code.

For example, the software development kit (software development kit, SDK) is a set of development tools for creating application software for a software package, a software framework, a hardware platform, an operating system, or the like. The SDK may be an SDK used by an application. The SDK promotes application creation by using a compiler, a debugger, or a software framework. Alternatively, the SDK may provide some files of an application interface for a program design language, or may include complex hardware that can communicate with an embedded system. In this embodiment of this application, the target two-dimensional code may be pulled up by invoking the SDK of the target application.

For example, the TapTapService may invoke the SDK of the target application, and send, to the target application through an interface of the SDK, the message indicating to pull up the target two-dimensional code.

802: The target application sends, to the AMS by invoking a startActivity function, the message indicating to pull up the target two-dimensional code.

After receiving the message from the TapTapService, the target application may invoke the startActivity function in response to the message to send, to the AMS, the message indicating to pull up the target two-dimensional code. For a specific implementation, refer to description of step 701 in FIG. 7. Details are not described herein.

803: The AMS sends, to the target application based on the message, a notification indicating to start a target activity.

The target activity may display the target two-dimensional code.

For a step implementation, refer to description of step 702 in FIG. 7. Details are not described herein.

804: Interact with a related thread and a related module based on the notification to display a first window.

For a step implementation, refer to description of step 703 to step 7011 in FIG. 7. Details are not described herein.

It may be understood that the implementation processes of pulling up the target application to display the corresponding two-dimensional code on the back screen that are shown in FIG. 7 and FIG. 8 are merely examples, and do not constitute limitations on this embodiment of this application.

In another possible implementation, if the electronic device replaces the two-dimensional code displayed on the back screen in response to the selection operation of the user, for example, reference may be made to description of FIG. 4D and FIG. 4E. Then, reference may also be made to the procedure in FIG. 7 or FIG. 8 to pull up an application of a selected two-dimensional code, to display the two-dimensional code. Details are not described herein.

In another possible implementation, the electronic device does not listen for the target event, and displays the floating window on the first screen and displays the target two-dimensional code on the back screen provided that it is determined that the electronic device is in the folded state, is not locked, and is screen-on. In this implementation, after the electronic device performs the procedure shown in FIG. 5, the taptap control service may obtain the specific screen foldable state, the specific screen-on/off state, and the specific screen unlock state. Then, the floating window may be displayed on the first screen if it is determined based on these states that the electronic device is in the folded state, is not locked, and is screen-on. In addition, the taptap control service starts the TapTapService, so that the TapTapService pulls up the target application to display the corresponding two-dimensional code on the back screen. For details, refer to step 605 in FIG. 6 and related description of FIG. 7 or FIG. 8. Details are not described herein.

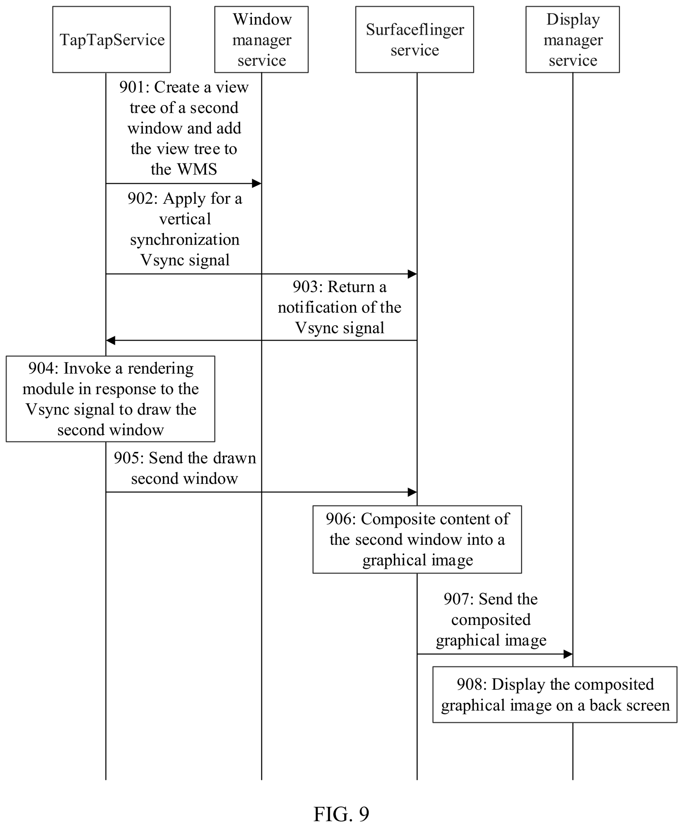

In a possible implementation, the background of the back screen is black when the electronic device displays the target two-dimensional code on the back screen. For an implementation procedure of displaying the background of the back screen as black, refer to FIG. 9. A procedure shown in FIG. 9 may include but is not limited to the following steps.

901: The TapTapService creates a view tree of a second window and adds the view tree to the WMS.

In a specific implementation, the view tree of the second window may be created and added to the WMS by the TapTapService. The second window is displayed on the back screen, and the second window has a black background.

For example, the second window may be a dialog (Dialog). A default display region used when the TapTapService creates the second window is the back screen. Then, the background of the second window may be set to be black by using a background set function, and when the second window with the black background is displayed on the back screen, the background of the back screen is also black. For example, the background set function may be, for example, a setBackgroundDrawable() function or a setBackground(Drawable background) function. This is not limited in this embodiment of this application.

902: The TapTapService applies to the surfaceflinger service for a vertical synchronization Vsync signal.

After the view tree of the second window is added to the WMS, the WMS may applies to the surfaceflinger service for the Vsync signal for screen refresh.

903: The surfaceflinger service returns a notification of the Vsync signal to the TapTapService.

When a next VSync signal arrives, the surfaceflinger service returns the notification of the Vsync signal to the TapTapService.

904: The TapTapService invokes the rendering module in response to the Vsync signal to draw the second window.

After receiving the notification, the TapTapService may invoke the rendering module, for example, invoke a ViewRootlmpl#performTraversals() method, to draw the second window.

905: The TapTapService sends the drawn second window to the surfaceflinger service.

After obtaining the drawn second window, the TapTapService may send the second window to the surfaceflinger service.

906: The surfaceflinger service composites content of the second window into a graphical image.

After receiving the drawn second window, the surfaceflinger service may perform graphical composition on the second window.

907: The surfaceflinger service sends the composited graphical image to the display manager service.

After the surfaceflinger service performs graphical composition on the second window, the obtained graphical image is sent to the display manager service for display.

908: The display manager service displays the composited graphical image on the back screen.

The display manager service displays, on the back screen, the graphical image composited based on the second window, so that the background of the back screen is black.

In a possible implementation, if the back screen needs to present, for example, the user interface shown in (b) in FIG. 4B or FIG. 4E, a preset region of the second window may be set to be a transparent region (for example, the region 403 shown in(b) in FIG. 4B or the region 407 shown in FIG. 4E). The target two-dimensional code is displayed in the transparent region. In addition, a corresponding application icon (for example, the icon 4041 of the first application shown in (b) in FIG. 4B or the icon 4081 of the second application shown in FIG. 4E) and a name of the target two-dimensional code (for example, the name 4042 of the two-dimensional code shown in (b) in FIG. 4B or the name 4082 of the two-dimensional code shown in FIG. 4E) may be further set at a specified position in the second window.

For example, a position and a size of the preset region of the second window and the specified position for displaying the application icon and the name of the two-dimensional code in the second window and a size thereof are preset. For example, the positions and the sizes may be set by using an extensible markup language (extensible markup language, XML) layout file or the like. This is not limited in this embodiment of this application. Alternatively, in another possible implementation, a position and a size of the preset region of the second window may not be preset. A display region of the two-dimensional code may be dynamically determined based on a position and a size of the to-be-displayed target two-dimensional code, and the position and the size of the transparent preset region are determined based on the display region.

For example, in a specific implementation, the electronic device may first draw the second window with the black background normally, and then may set the preset region as a transparent region by invoking a function (for example, a srcPaint.setXfermode(new PorterDuffXfermode(PorterDuff.Mode.SRC_OUT) function)) for setting the transparent region. In addition, the layout file describes the application icon and the name of the two-dimensional code that are displayed at the specified position. Therefore, the application icon and the name of the two-dimensional code may be laid out and displayed at the specified position based on the layout file.

For example, in a specific implementation, the first window displayed on the back screen based on FIG. 7, FIG. 8, or another possible implementation is covered by the second window. Because the preset region of the second window is the transparent region and the background is opaque black, the transparent region is exactly the display region of the target two-dimensional code in the first window. In addition, the application icon and the name of the two-dimensional code are laid out at the specified position in the second window. Therefore, the user interface seen on the back screen is the user interface shown in (b) in FIG. 4Bor FIG. 4E. For example, a layer of the first window may be located below a layer of the second window through layer setting, to further present a display effect that the first window is covered by the second window.

In another possible implementation, if the back screen needs to present, for example, the user interface shown in(b) in FIG. 4Bor FIG. 4E, a screenshot of the target two-dimensional code in the first window may alternatively be obtained, and the screenshot of the target two-dimensional code is laid out in the preset region of the second window for display. In this implementation, the preset region may not be set to be the transparent region.

It may be understood that the implementation in which the back screen presents the user interface shown in(b) in FIG. 4B or FIG. 4E is merely an example, and does not constitute a limitation on this embodiment of this application.

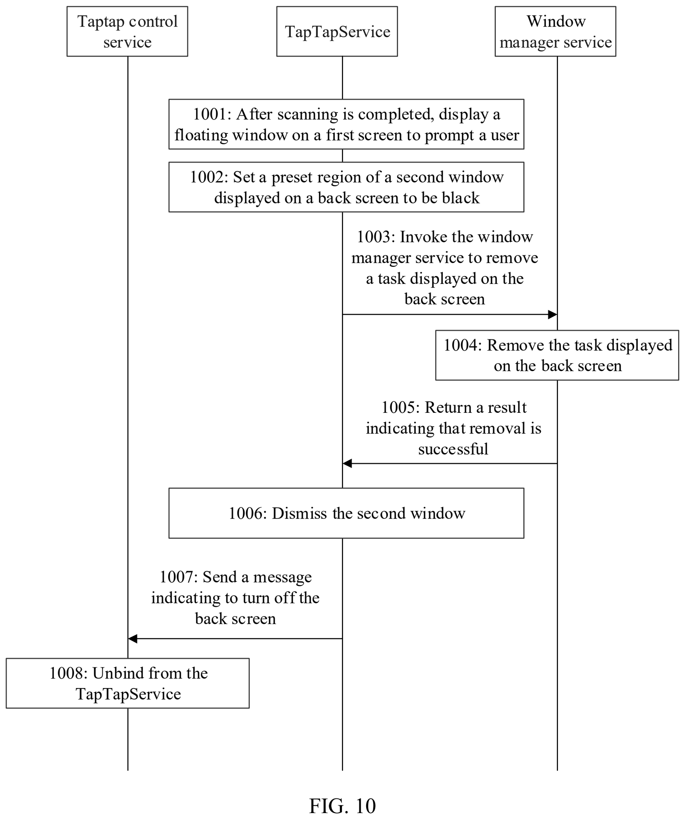

In a possible implementation, if the target two-dimensional code displayed on the back screen is already successfully scanned to complete a corresponding payment operation or the like, the back screen of the electronic device may be turned off. Turn-off of the back screen may be that, for example, the back screen of the electronic device may exit the user interface displaying the target two-dimensional code and changes into a black screen, or the back screen does not display any interface. The following exemplarily describes, with reference to FIG. 10, an interaction procedure of turning off the back screen. A procedure shown in FIG. 10 may include but is not limited to the following steps.

1001: After scanning is completed, the TapTapService displays the floating window on the first screen to prompt the user.

In a possible implementation, after a corresponding operation is completed after the target two-dimensional code displayed on the back screen is scanned, the interface displayed in the first window is transitioned. The target two-dimensional code is no longer presented in the preset region of the second window on the back screen after transition (for example, refer to the user interfaces in FIG. 4F and FIG. 4G). The TapTapService may detect this change, to learn that scanning is completed and a corresponding payment operation or the like is completed, thereby triggering turn-off of the back screen.

For example, the TapTapService may capture a picture of the user interface displayed on the back screen and identify the picture. If no two-dimensional code is identified in the picture, it is determined that scanning is completed. Alternatively, for example, the TapTapService may detect elements such as a text displayed in the preset region on the back screen, and if a text such as "Payment succeeded" or "Scan completed" is detected, it may be determined that scanning is completed. Alternatively, for example, the TapTapService may invoke an existing intelligent capability (for example, an Android accessibility framework function) in the system to identify a user interface obtained after scanning is completed, to determine that scanning is completed.

In another possible implementation, the TapTapService may preset duration in which the back screen displays the target two-dimensional code. If duration in which the back screen displays a specific target two-dimensional code reaches the preset duration, it may be determined that scanning is completed and a corresponding payment operation or the like is completed, thereby triggering turn-off of the back screen. For example, the preset duration may be, for example, 10 seconds or 20 seconds. This is not limited in this embodiment of this application.

In another possible implementation, interaction and communication between the TapTapService and the target application may be implemented by using a bundle service (bundleservice). After the corresponding operation is completed after the target two-dimensional code displayed on the back screen is scanned, the target application may detect the completion. Then, the target application may notify the TapTapService of information indicating that scanning is completed, to trigger the TapTapService to turn off the back screen.

After the TapTapService learns that scanning is completed, a floating window may be displayed on the main screen to indicate that scanning is completed. For the floating window, refer to, for example, the floating window 402C shown in FIG. 4H or the floating window 402D shown in FIG. 4I. For example, the TapTapService may invoke the window manager service WMS to display the floating window. For an implementation process in which the TapTapService displays the floating window on the first screen, exemplarily refer to the implementation process in which the target application displays the first window on the back screen. A difference lies in setting of properties such as a display region, a display position, and an interface element in a window. Details are not described in this embodiment of this application again.

1002: The TapTapService sets the preset region of the second window displayed on the back screen to be black.

It can be learned from the foregoing description that the second window is a dialog placed at an upper layer of the first window displaying the target two-dimensional code. To display the target two-dimensional code at a lower layer, the preset region of the second window is set to be a transparent region. After the TapTapService learns that scanning is completed, it indicates that there is no need to continue to display the first window at the lower layer. Therefore, the background of the second window at the upper layer may be completely set to be black. That is, the background of the preset region is also set to be black. In this way, the first window is completely covered, and the back screen seen by the user is black, for example, as shown in (b) in FIG. 4A.

1003: The TapTapService invokes the window manager service to remove a task displayed on the back screen.

For example, after the TapTapService completely sets the background of the second window to be black, optionally, after the floating window that is displayed on the main screen and that indicates that scanning is completed disappears (it can be learned from the foregoing description that the floating window automatically disappears after the preset duration), the TapTapService may invoke the window manager service to remove the task displayed on the back screen. That is, a window displayed on the back screen is removed.

For example, the TapTapService may invoke a removeAllTaskForDisplay() function, and the function invokes the window manager service to remove the task displayed on the back screen. An input parameter of the removeAllTaskForDisplay() function is an identifier (displayID) of the back screen. That is, the displayID indicates that a task to be removed is the task displayed on the back screen.

1004: The window manager service removes the task displayed on the back screen.

In a specific implementation, the window manager service finds an object instance displayContent of the back screen based on the displayID in response to the foregoing invoking. Then, all tasks in the displayContent are traversed. In addition, a removeImmediately() function is invoked during traversing to remove a traversed task. The task displayed on the back screen is also removed after traversing is completed.

1005: The window manager service returns, to the TapTapService, a result indicating that removal is successful.

After the task displayed on the back screen is removed, the window manager service may return, to the TapTapService, the result indicating that removal is successful.

1006: The TapTapService dismisses the second window.

In a specific implementation, because the task displayed on the back screen, that is, a window, is completely removed, the second window covered at the upper layer may be dismissed. For example, a presentation.dismiss() function may be invoked to dismiss the second window.

Because the task displayed on the back screen is completely removed, there is no window displayed on the back screen after the second window is dismissed, and the back screen is in the black screen state.

1007: The TapTapService sends, to the taptap control service, a message indicating to turn off the back screen.

After dismissing the second window, the TapTapService may send, to the taptap control service, the message indicating to turn off the back screen, to inform the taptap control service that there is no need to continue display on the back screen.

1008: The taptap control service is unbound from the TapTapService.

The taptap control service may be unbound from the TapTapService in response to the message indicating to turn off the back screen. For example, the taptap control service may be unbound from the TapTapService by using a ubindservice() function.

It may be understood that the process shown in FIG. 10 is merely an example, and does not constitute a limitation on this embodiment of this application.

In conclusion, compared with a conventional technology, the two-dimensional code display method provided in the embodiments of this application may quickly pull up a to-be-used two-dimensional code on the back screen for display without interrupting a task currently performed on the first screen of the electronic device, thereby reducing operation steps of displaying a corresponding two-dimensional code, and improving two-dimensional code display efficiency and user experience.

An embodiment of this application provides an electronic device. The electronic device includes one or more processors and one or more memories; and the one or more memories are coupled to the one or more processors, the one or more memories are configured to store computer program code, the computer program code includes computer instructions, and when the one or more processors execute the computer instructions, the electronic device is enabled to perform the method described in the foregoing embodiments.

An embodiment of this application further provides a chip system. The chip system is used in an electronic device, and the chip system includes one or more processors. The one or more processors are configured to invoke computer instructions to enable the electronic device to perform the method described in the foregoing embodiments.

An embodiment of this application further provides a computer program product including instructions. When the computer program product runs on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It may be understood that the implementations of this application may be randomly combined to achieve different technical effects.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the procedures of the methods in the foregoing embodiments may be implemented by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

In conclusion, the foregoing descriptions are only embodiments of the technical solutions of the present invention, and are not intended to limit the protection scope of the present invention. Any modifications, equivalent replacements, improvements, or the like made based on the disclosure of the present invention shall fall within the protection scope of the present invention.

## Claims

1. A two-dimensional code display method, applied to an electronic device, wherein the electronic device comprises a display screen, the display screen comprises a first screen and a second screen, display directions of the first screen and the second screen are opposite to each other when the display screen is in a folded state, the display directions of the first screen and the second screen are the same when the display screen is in an unfolded state, and the first screen and the second screen are two different display regions of the display screen;
displaying a first user interface on the first screen when the display screen is in the folded state, wherein the first user interface comprises an interface of a first application;
receiving a first operation of a user at a first time point, displaying a first two-dimensional code of a second application on the second screen in response to the first operation, and displaying the first user interface on the first screen in a process of displaying the first two-dimensional code on the second screen;
turning off the second screen after the first two-dimensional code is scanned;
displaying a second user interface of the first application on the display screen when the display screen is in the unfolded state, wherein the second user interface is an interface obtained after the first user interface is adapted to the unfolded state; and
receiving the first operation of the user at a second time point, and not displaying the first two-dimensional code of the second application on the second screen.

2. The method according to claim 1, wherein the first screen is in a locked state or a screen-off state when the display screen is in the folded state; and the method further comprises:
receiving the first operation of the user at a third time point, and not displaying the first two-dimensional code of the second application because the first screen is in the locked state or the screen-off state.

3. The method according to claim 1 or 2, wherein the first operation comprises a taptap operation performed on a back surface of the first screen.

4. The method according to any one of claims 1-3, wherein before the displaying a first user interface on the first screen, the method further comprises:
displaying, by the electronic device, the second user interface when the electronic device is in the unfolded state, wherein the second user interface does not comprise a first floating window; and
the displaying a first user interface on the first screen comprises:
displaying, by the electronic device, the first user interface on the first screen after the electronic device changes from the unfolded state to the folded state, wherein the first user interface comprises the first floating window, and the first floating window comprises a first interface element of the first two-dimensional code.

5. The method according to claim 4, wherein the method further comprises:
receiving, by the first user interface when the display screen is in the folded state, a second operation performed by the user on the first interface element; and
displaying the first two-dimensional code on the second screen in response to the second operation.

6. The method according to claim 4 or 5, wherein the first interface element comprises at least one of an icon of the second application, a name of the second application, and a type of the first two-dimensional code.

7. The method according to claim 3 or 4, wherein the method further comprises:
expanding the first floating window and displaying a second interface element of a second two-dimensional code of a third application in response to an operation performed on a pull-down control of the first floating window; and
receiving a third operation performed by the user on the second interface element, and displaying the second two-dimensional code on the second screen in response to the third operation.

8. The method according to any one of claims 1-7, wherein after the first two-dimensional code is scanned, the method further comprises:
displaying a second floating window on the first screen, wherein the second floating window comprises information indicating that the first two-dimensional code is scanned.

9. The method according to any one of claims 1-8, wherein before the receiving a first operation of a user, and displaying a first two-dimensional code of a second application on the second screen in response to the first operation, the method further comprises:
obtaining first state information of the display screen; and
listening for an input event of the first operation when the first state information indicates that the display screen is in the folded state, is not locked, and is screen-on.

10. The method according to any one of claims 1-8, wherein before the receiving the first operation of the user, and not displaying the first two-dimensional code on the display screen, the method further comprises:
obtaining second state information of the display screen; and
cancelling listening for an input event of the first operation when the second state information indicates that the display screen is in a target state, wherein the target state comprises the display screen being in the unfolded state, the locked state, or the screen-off state.

11. The method according to any one of claims 1-10, wherein the displaying a first two-dimensional code of a second application on the second screen in response to the first operation comprises:
displaying a target window and a third user interface on the second screen in response to the first operation, wherein the third user interface is a user interface that is in the second application and that comprises the first two-dimensional code, the target window comprises a first region and a second region, the first region is a transparent region, the second region is a black region, the target window covers the third user interface, and a position of the first two-dimensional code corresponds to a position of the first region.

12. The method according to claim 11, wherein the turning off the second screen comprises:
setting the first region to be black;
removing a task window displayed on the second screen, wherein the task window comprises the third user interface; and
dismissing the target window.

13. A two-dimensional code display method, applied to an electronic device, wherein the electronic device comprises a display screen, the display screen comprises a first screen and a second screen, display directions of the first screen and the second screen are opposite to each other when the display screen is in a folded state, the display directions of the first screen and the second screen are the same when the display screen is in an unfolded state, and the first screen and the second screen are two different display regions of the display screen;
displaying a user interface of a first application and a first floating window on the first screen when the display screen is in the folded state, wherein the first floating window comprises a first interface element of a first two-dimensional code of a second application;
receiving, at a first time point, a selection operation performed by a user on the first interface element, displaying the first two-dimensional code on the second screen in response to the selection operation, displaying the user interface of the first application on the first screen in a process of displaying the first two-dimensional code on the second screen, and turning off the second screen after the first two-dimensional code is scanned; and
not displaying, by the display screen, the first floating window when the display screen is in a target state, wherein the target state comprises the display screen being in the unfolded state, a locked state, or a screen-off state.

14. An electronic device, comprising: a display screen, one or more processors, and one or more memories, wherein the one or more processors are coupled to the display screen and the one or more memories, the one or more memories are configured to store computer program code, the computer program code comprises computer instructions, and when the one or more processors execute the computer instructions, the electronic device is enabled to perform the method according to any one of claims 1-12 or the electronic device is enabled to perform the method according to claim 13.

15. A computer-readable storage medium, comprising instructions, wherein when the instructions are run on an electronic device, the electronic device is enabled to perform the method according to any one of claims 1-12, or when the instructions are run on an electronic device, the electronic device is enabled to perform the method according to claim 13.

16. A computer program product comprising instructions, wherein when the computer program product runs on an electronic device, the electronic device is enabled to perform the method according to any one of claims 1-12, or when the computer program product runs on an electronic device, the electronic device is enabled to perform the method according to claim 13.
